# FASCICULE DE BREVET EUROPEEN

(11) **EP 3 659 374 B1**
(45) Date de publication et mention de la délivrance du brevet: **15.06.2022**
(21) Numéro de dépôt: 18749040.4
(22) Date de dépôt: 12.07.2018
(51) Int. Cl.: H04W 52/14, H04W 52/42, H04W 52/22, H01Q 3/46, H01Q 15/00, H01Q 19/10, H04W 52/24

(54) **POINT D'ACCES DE RESEAU DE COMMUNICATION UTILISANT UN DISPOSITIF DE MISE EN FORME D'ONDE, ET PROCEDE DE COMMUNICATION SANS FIL**
KOMMUNIKATIONSNETZWERKZUGANGSPUNKT MIT EINER WELLENFORMFORMUNGSVORRICHTUNG, UND DRAHTLOSES KOMMUNIKATIONSVERFAHREN
COMMUNICATION NETWORK ACCESS POINT USING A WAVEFORM SHAPING DEVICE, AND WIRELESS COMMUNICATION METHOD

(30) Priorité: 28.07.2017 FR 1757269
(43) Date de publication de la demande: 03.06.2020
(73) Titulaire: Greenerwave, 06200 Nice (FR); Centre National de la Recherche Scientifique - CNRS, 75016 Paris (FR); Ecole Supérieure de Physique et de Chimie Industrielles de la Ville de Paris, 75005 Paris (FR)
(72) Inventeur: LEROSEY, Geoffroy, 75010 Paris (FR); FINK, Mathias, 92190 Meudon (FR); LEMOULT, Fabrice, 75020 Paris (FR); AUBRY, Alexandre, 94200 Ivry Sur Seine (FR); FLOUME, Timmy, 75020 Paris (FR)
(74) Mandataire: Plasseraud IP
(86) Numéro de dépôt international: PCT/FR2018/051765
(87) Numéro de publication internationale: WO 2019/020894

(56) Documents cités:
- WO-A1-2015/039769
- US-A1- 2004 263 408

## Description

### DOMAINE TECHNIQUE

La présente invention est relative à un point d'accès de réseau de communication et à un réseau de communication comprenant un dispositif de mise en forme d'onde et un point d'accès, ainsi qu'un procédé de communication sans fil.

### ETAT DE LA TECHNIQUE ANTERIEURE

Le document WO 2015/039769 montre l'utilisation d'un dispositif de mise en forme d'onde qui utilise un signal pilote provenant d'un dispositif électronique mobile. Le dispositif électronique mobile est par exemple un téléphone mobile ou un ordinateur portable. Ce signal pilote comprend par exemple le niveau ou la qualité de réception d'une onde incidente sur le dispositif électronique mobile.

Ce dispositif de mise en forme est en liaison avec le dispositif électronique mobile, ce qui est parfois peu pratique ou très contraignant, car ce dispositif électronique mobile doit gérer des communications avec deux dispositifs indépendants l'un de l'autre : le réseau et le dispositif de mise en forme.

Le document « Intelligent walls as autonomous parts of smart indoor environments », L. Subrt, P. Pechac, montre un réseau de communication intérieur qui contrôle des murs équipés de surfaces actives sélectives en fréquence. Ces surfaces actives sont pilotables entre un état magnétiquement transparent et un état d'isolation, ce qui permet de piloter un masquage électromagnétique entre des pièces délimitées par lesdits murs équipés.

Ce système ne fait qu'un contrôle entre des pièces et ne fait aucune amélioration de réception pour un dispositif électronique mobile. En outre, un tel système ne peut pas fonctionner dans le cadre d'un réseau de communication en extérieur. US2004/263408 montre un autre exemple de dispositif de mise en forme d'onde.

### EXPOSE DE L'INVENTION

La présente invention a pour but de résoudre les problèmes explicités ci-dessus, et propose **un point d'accès de réseau de communication** comprenant un module de transmission comprenant une antenne de réseau pour émettre et/ou recevoir une onde primaire, et pour recevoir un signal pilote d'un dispositif de communication sans fil. Ce point d'accès est en connexion avec une unité de contrôle qui est adaptée pour envoyer des paramètres à un dispositif de mise en forme d'onde, et qui détermine les paramètres en fonction d'au moins une information contenue dans le signal pilote, le dispositif de mise en forme d'onde étant adapté pour réfléchir et/ou transmettre l'onde primaire en une onde réfléchie en fonction des paramètres reçus de l'unité de contrôle, l'information étant fonction de l'onde primaire émise par le point d'accès et de l'onde réfléchie par le dispositif de mise en forme d'onde, **et** le point d'accès est **caractérisé en ce que :**
- lorsque le module de transmission reçoit un signal pilote d'un dispositif de communication sans fil, l'unité de contrôle est dans un mode de fonctionnement d'optimisation dans lequel l'unité de contrôle transmet des paramètres, dits deuxièmes paramètres, au dispositif de mise en forme d'onde, la transmission de chacun des deuxièmes paramètres étant espacée dans le temps par une durée permettant une réception d'un signal pilote par le module de transmission, et dans lequel l'unité de contrôle détermine de nouveaux deuxièmes paramètres par un algorithme d'optimisation qui optimise une valeur qui est fonction d'une succession temporelle des signaux pilotes reçus précédemment et des deuxièmes paramètres déterminés précédemment, et
- tant que le module de transmission ne reçoit pas de signal pilote d'un dispositif de communication sans fil, l'unité de contrôle est dans un mode de fonctionnement de recherche dans lequel l'unité de contrôle transmet des paramètres, dits premiers paramètres, au dispositif de mise en forme d'onde, la transmission de chacun des premiers paramètres étant espacée dans le temps par une durée permettant une réception d'un signal pilote par le module de transmission et sont variés jusqu'à recevoir un signal pilote.

Grâce à ces dispositions, le point d'accès gère la communication sans fil avec le dispositif de communication sans fil et gère un mode de fonctionnement d'optimisation du dispositif de mise en forme d'onde durant lequel l'unité de contrôle cherche à optimiser le dispositif de mise en forme d'onde pour améliorer la communication avec le dispositif de communication sans fil. Cette collaboration ou fonctionnement avec un dispositif de mise en forme d'onde permet d'améliorer la portée du point d'accès et/ou permet de réduire la puissance d'émission du point d'accès transmise dans l'environnement.

En outre, le point d'accès gère également (en combinaison du précédent mode de fonctionnement d'optimisation) un mode de fonctionnement de recherche du dispositif de mise en forme d'onde qui permet la détection d'un dispositif de communication sans fil.

Dans divers modes de réalisation du point d'accès selon l'invention, on peut éventuellement avoir recours en outre à l'une et/ou à l'autre des dispositions suivantes.

Selon un aspect, l'antenne de réseau est une antenne multiple.

Selon un aspect, le point d'accès effectue par son antenne de réseau un réglage de son émission vers le dispositif de communication sans fil avant de permettre à l'unité de contrôle de passer dans le mode de fonctionnement d'optimisation qui optimise des paramètres du dispositif de mise en forme d'onde.

Selon un aspect, le dispositif de mise en forme d'onde comprend une antenne et effectue par son antenne de réseau un réglage de son émission vers ladite antenne du dispositif de mise en forme d''onde avant de permettre à l'unité de contrôle de passer dans le mode de fonctionnement d'optimisation qui optimise des paramètres du dispositif de mise en forme d'onde.

Selon un aspect, le point d'accès effectue par son antenne de réseau un réglage de son émission vers le dispositif de communication sans fil ou vers le dispositif de mise en forme d'onde après la fin de l'optimisation du dispositif de mise en forme d'onde par l'unité de contrôle.

Selon un aspect, le point d'accès comprend l'unité de contrôle.

L'invention se rapporte également à **un réseau de communication** comprenant :
- un point d'accès tel que présenté ci-dessus,
- une unité de contrôle en communication avec le point d'accès par un module de transmission de rétroaction du point d'accès qui lui transmet au moins l'information contenue dans le signal pilote; et
- un dispositif de mise en forme d'onde en communication avec l'unité de contrôle.

Dans divers modes de réalisation du réseau de communication, on peut éventuellement avoir recours en outre à l'une et/ou à l'autre des dispositions suivantes.

Selon un aspect, l'antenne de réseau est une antenne multiple.

Selon un aspect, le point d'accès effectue par son antenne de réseau un réglage de son émission vers le dispositif de communication sans fil avant de permettre à l'unité de contrôle de passer dans le mode de fonctionnement d'optimisation qui optimise des paramètres du dispositif de mise en forme d'onde.

Selon un aspect, le dispositif de mise en forme d'onde comprend une antenne et effectue par son antenne de réseau un réglage de son émission vers ladite antenne du dispositif de mise en forme d''onde avant de permettre à l'unité de contrôle de passer dans le mode de fonctionnement d'optimisation qui optimise des paramètres du dispositif de mise en forme d'onde.

Selon un aspect, le point d'accès effectue par son antenne de réseau un réglage de son émission vers le dispositif de communication sans fil ou vers le dispositif de mise en forme d'onde après la fin de l'optimisation du dispositif de mise en forme d'onde par l'unité de contrôle.

Selon un aspect, le dispositif de mise en forme d'onde comprend une antenne, et le dispositif de mise en forme d'onde utilise ladite antenne pour détecter une présence d'un dispositif de communication sans fil non détecté par le point d'accès, par la réception d'un signal pilote, et dans lequel le dispositif de mise en forme d'onde transmet cette détection au point d'accès pour permettre à l'unité de contrôle de passer dans le mode de fonctionnement d'optimisation qui optimise des paramètres du dispositif de mise en forme d'onde.

Selon un aspect, l'unité de contrôle inclut une base de données, et les paramètres sont au moins en partie issus de ladite base de données.

Selon un aspect, le signal pilote reçu par le module de transmission de rétroaction du point d'accès comprend une information de coordonnée de géolocalisation du dispositif de communication sans fil, et l'unité de contrôle détermine les paramètres du mode de fonctionnement d'optimisation en fonction de ladite coordonnée de géolocalisation du dispositif de communication sans fil.

Selon un aspect, les paramètres du mode de fonctionnement de recherche sont déterminés de façon aléatoire.

Selon un aspect, une distance entre le point d'accès et le dispositif de mise en forme d'onde est d'au moins un dixième d'une portée du point d'accès.

Selon un aspect, l'unité de contrôle transmet au dispositif de mise en forme d'onde les paramètres par une liaison sans fil dans un canal de gestion.

Selon un aspect, le point d'accès est un premier point d'accès émettant une première onde primaire, et dans lequel le réseau de communication comprend en outre un deuxième point d'accès, le deuxième point d'accès émettant une deuxième onde primaire, et le dispositif de mise en forme d'onde étant adapté à réfléchir et/ou réfléchir la première onde primaire en une première onde réfléchie et la deuxième onde primaire en une deuxième onde réfléchie.

Selon un aspect, le dispositif de mise en forme d'onde est un premier dispositif de mise en forme d'onde, et dans lequel le réseau de communication comprend en outre un deuxième dispositif de mise en forme d'onde, l'unité de contrôle transmettant au deuxième dispositif de mise en forme d'onde des paramètres indépendamment des paramètres déterminés pour le premier dispositif de mise en forme d'onde.

Selon un aspect, le dispositif de de communication sans fil est un premier dispositif de communication sans fil, et le signal pilote est un premier signal pilote émis par le premier dispositif de communication sans fil, et dans lequel le réseau de communication comprend en outre un deuxième dispositif de communication sans fil qui émet un deuxième signal pilote, et dans lequel le point d'accès transmet au moins des informations du premier signal pilote et du deuxième signal pilote à l'unité de contrôle pour que l'unité de contrôle détermine les paramètres en fonction du premier signal pilote et du deuxième signal pilote.

Selon un aspect, le dispositif de mise en forme d'onde comprend deux portions, chacune des deux portions étant adaptée à modifier une onde primaire dans une bande passante différente de l'autre portion et chacune des deux portions étant configurable de façon indépendante l'une de l'autre.

Selon un aspect, l'onde primaire correspond à une onde d'un canal de communication d'un réseau d'un type choisi dans une liste comprenant un réseau de téléphonie sans fil, un réseau informatique sans fil, et un réseau d'objets connectés.

L'invention se rapporte également à **un procédé de communication sans fil** implémenté dans un réseau de communication comprenant :
- un point d'accès comprenant un module de transmission comprenant une antenne de réseau pour émettre et/ou recevoir une onde primaire,
- une unité de contrôle en communication avec le point d'accès par un module de transmission de rétroaction du point d'accès, et
- un dispositif de mise en forme d'onde en communication avec l'unité de contrôle,
ledit procédé étant caractérisé en ce que :
- un dispositif de communication sans fil émet un signal pilote en réponse d'une onde primaire reçue,
- le point d'accès transmet à l'unité de contrôle et par le module de transmission de rétroaction, au moins une information contenue dans le signal pilote,
- l'unité de contrôle détermine des paramètres en fonction de ladite information, et transmet les paramètres au dispositif de mise en forme d'onde,
- le dispositif de mise en forme d'onde réfléchit et/ou transmet l'onde primaire en une onde réfléchie en fonction des paramètres reçus de l'unité de contrôle, l'information étant fonction de l'onde primaire émise par
le point d'accès et de l'onde réfléchie par le dispositif de mise en forme d'onde, et
- lorsque le module de transmission reçoit un signal pilote d'un dispositif de communication sans fil, l'unité de contrôle est dans un mode de fonctionnement d'optimisation dans lequel l'unité de contrôle transmet des paramètres, dits deuxièmes paramètres, au dispositif de mise en forme d'onde, la transmission de chacun des deuxièmes paramètres étant espacée dans le temps par une durée permettant une réception d'un signal pilote par le module de transmission, et dans lequel l'unité de contrôle détermine de nouveaux deuxièmes paramètres par un algorithme d'optimisation qui optimise une valeur qui est fonction d'une succession temporelle des signaux pilotes reçus précédemment et des deuxièmes paramètres déterminés précédemment, et
- tant que le module de transmission ne reçoit pas de signal pilote du dispositif de communication sans fil, l'unité de contrôle est dans un mode de fonctionnement de recherche dans lequel l'unité de contrôle transmet des paramètres, dits premiers paramètres, au dispositif de mise en forme d'onde, la transmission de chacun des premiers paramètres étant espacée dans le temps par une durée permettant une réception d'un signal pilote par le module de transmission et sont variés jusqu'à recevoir un signal pilote.

### BREVE DESCRIPTION DES DESSINS

D'autres caractéristiques et avantages apparaîtront au cours de la description suivante de plusieurs modes de réalisation, donnés à titre d'exemples non limitatifs, en regard des dessins joints.

Sur les dessins :
- la figure 1 est une représentation schématique d'un premier mode de réalisation de réseau de communication sans fil;
- la figure 2 est une représentation schématique d'un deuxième mode de réalisation de réseau de communication sans fil ;
- la figure 3 est une représentation schématique d'un troisième mode de réalisation de réseau de communication sans fil ; et
- la figure 4 est une représentation schématique d'un quatrième mode de réalisation de réseau de communication sans fil.

Sur les différentes figures, les mêmes références numériques désignent des éléments identiques ou similaires.

### DESCRIPTION DETAILLEE

L'invention concerne un réseau de communication par onde qui peut être de nature électromagnétique, acoustique ou vibratoire. Pour simplifier, le descriptif ci-dessous fera référence à une onde électromagnétique, en particulier pour une utilisation dans la téléphonie mobile. Cependant, le réseau de communication décrit s'applique à tout domaine de fréquence d'ondes.

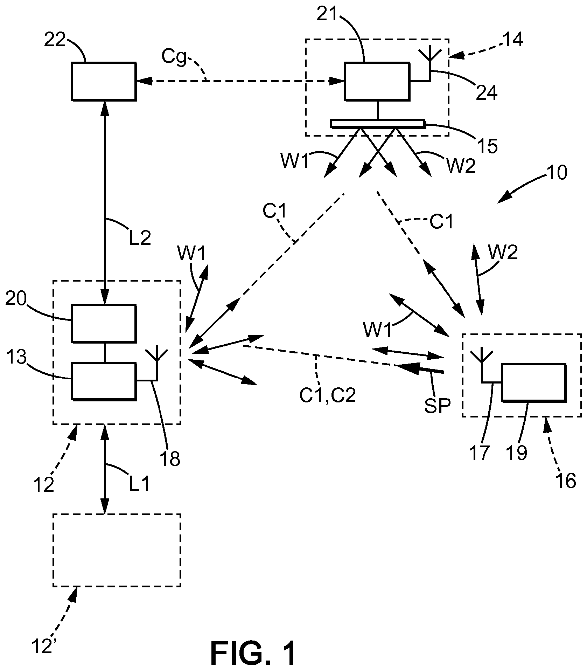

En se référant à la **figure 1**, un réseau de communication 10 selon un premier mode de réalisation, donné à titre d'exemple, inclut un point d'accès 12, une unité de contrôle 22, un dispositif de mise en forme d'onde 14 et un dispositif de communication sans fil 16, typiquement un téléphone mobile.

Le point d'accès 12 est avantageusement connecté à un réseau de communication global comprenant des liaisons de réseau L1 qui interconnectent d'autres points d'accès 12' dudit réseau de communication global, ce qui permet de connecter des utilisateurs très distants. Le point d'accès 12 constitue donc pour le réseau de communication 10 une porte d'entrée ou une porte de sortie (passerelle) au réseau de communication global. Le réseau de communication est apte à faire transiter des informations de type voies (téléphonie) et/ou de type données (internet). Dans le cas de l'application à la communication de voies, i.e. téléphonie, le point d'accès 12 correspond, par exemple, à une station de réseau de téléphone mobile ou à une cellule femto ou à une picocellule. Dans le cas de l'application à la communication de données, le point d'accès 12 correspond par exemple à un modem Internet souvent appelée une boîte Internet adaptée pour servir de passerelle entre le réseau informatique mondial Internet et un réseau informatique local par exemple à l'intérieur d'un bâtiment via une liaison sans fil de type WiFi. En variante, le point d'accès est un modem intégrant d'autres fonctions du réseau local, ce dispositif pouvant ainsi être un routeur (serveur d'adresses de réseau). En variante, le point d'accès est un dispositif annexe d'un réseau local, comme par exemple un répéteur qui prolonge la portée d'un réseau local.

Le point d'accès 12 comprend :
- un module de transmission 13 adapté pour émettre et/ou recevoir une onde, usuellement dite onde primaire W1 et qui permet d'émettre et de recevoir des communications de téléphonie mobile dans un premier canal de communication C1, et
- un module de transmission de rétroaction 20 adapté pour recevoir un signal pilote SP provenant d'un dispositif de communication sans fil 16, tel que par exemple un téléphone mobile.

Le module de transmission 13 comprend une antenne de réseau 18 émettant et/ou recevant l'onde primaire W1. L'antenne de réseau 18 peut être une antenne simple ou une antenne multiple pour établir une liaison de type MIMO (pour « Multiple Inputs Multiple Outputs »). L'antenne de réseau 18 peut être une antenne omnidirectionnelle ou directive.

Le module de transmission de rétroaction 20 reçoit le signal pilote SP provenant du dispositif de communication sans fil 16, par tout moyen et éventuellement par le module de transmission 13, et le transfère partiellement (certaines informations) ou entièrement à une unité de contrôle 22, de façon directe ou indirecte. Optionnellement, le module de transmission de rétroaction 20 effectue un prétraitement du signal pilote SP pour en extraire des informations, et/ou pour transformer lesdites informations par des calculs et/ou transformations et/ou codage. Par exemple, le module de transmission de rétroaction 20 établit ou évalue l'estimation en réception du premier canal de transmission C1, i.e. l'estimation du gain et du changement de phase de ce premier canal de communication C1 entre le dispositif de communication sans fil 16 et le point d'accès 12 (liaison montante ou « up-link »). Le point d'accès 12 émet lui-même un signal pilote d'émission que le dispositif de communication sans fil 16 utilise pour réciproquement établir ou évaluer une estimation en émission du premier canal de transmission C1, dans la direction inverse, i.e. entre le point d'accès 12 et le dispositif de communication sans fil 16 (liaison descendante ou « down-link »). Le dispositif de communication sans fil 16 transmet alors au point d'accès 12 l'estimation en émission, et réciproquement le point d'accès 12 transmet au dispositif de communication sans fil 16 l'estimation en réception. Cet échange des estimations du premier canal de communication C1 en réception et émission permet d'améliorer les transmissions dans les deux directions de communication.

L'unité de contrôle 22 est connecté au module de transmission de rétroaction 20 du point d'accès 12 pour recevoir le signal pilote SP et/ou des informations extraites dudit signal pilote et/ou des informations évaluées/estimées à partir dudit signal pilote. L'unité de contrôle 22 est en liaison avec le dispositif de mise en forme d'onde 14 pour le configurer. Ainsi, de manière générale aux variantes précédentes, l'unité de contrôle 22 traite le signal pilote SP pour générer des paramètres de configuration du dispositif de mise en forme 14, comme cela va être explicité ci-après.

Selon une première variante, l'unité de contrôle 22 fait partie intégrante du point d'accès 12.

Selon une deuxième variante, l'unité de contrôle 22 fait partie intégrante du dispositif de mise en forme d'onde 14 décrit ci-dessous.

Le dispositif de mise en forme d'onde 14 comprend une surface adaptable 15 (électromagnétique) qui réfléchit et/ou transmet une onde incidente telle que par exemple l'onde primaire W1 en une onde réfléchie W2 modifiée durant sa réflexion et/ou transmission par la surface adaptable 15 du dispositif de mise en forme d'onde 14.

Le dispositif de mise en forme d'onde 14 peut également comprendre un contrôleur 21 pour son fonctionnement. Ce contrôleur 21 est connecté à la surface électromagnétique afin de commander ladite surface adaptable 15, en particulier pour faire varier une impédance électromagnétique, modifiant ainsi la façon dont l'onde primaire W1 est réfléchie et/ou transmise, selon les paramètres de configuration déterminés par l'unité de contrôle 22.

Ainsi, le dispositif de mise en forme d'onde 14 est un dispositif passif qui modifie la réflexion/transmission d'une onde incidente. Ainsi, il modifie la répartition des ondes autour de lui, en modifiant des conditions sur sa surface adaptable 15. Ce dispositif n'ajoute pas d'énergie électromagnétique dans l'environnement, mais modifie sa répartition spatiale.

Le dispositif de mise en forme d'onde 14 n'est pas un dispositif actif, telle qu'une antenne qui émet et rayonne une onde électromagnétique, en ajoutant une émission d'énergie électromagnétique dans l'environnement.

Le brevet américain n° US 6 538 621 montre un type de surface électromagnétique dont l'impédance est adaptable ou modifiable qui peut être utilisée dans le dispositif de mise en forme d'onde 14. Cette surface électromagnétique comprend une pluralité d'éléments résonants, chaque élément résonant pouvant être accordé. La surface électromagnétique de ce brevet comprend des éléments de réseau situés à une distance d'un plan de masse, des éléments de réseau adjacents étant reliés l'un à l'autre par un agencement de condensateurs variables, chaque condensateur variable pouvant être commandé par un potentiel de commande. L'impédance de la surface électromagnétique est modifiée en conséquence, par exemple pour focaliser l'onde modifiée ou pour donner une direction à l'onde modifiée.

Un autre exemple, décrit dans la demande internationale WO 2015/039769, montre une pluralité d'éléments accordables comprenant deux éléments de résonateur séparés. Le premier résonateur résonne, par exemple, à une première fréquence et le second résonateur résonne à une seconde fréquence différente de la première fréquence. Les fréquences sont réglables. L'ensemble d'éléments accordables peut comprendre différents états. Les états accordables définissent une impédance spécifique pour la surface électromagnétique. L'impédance de la surface électromagnétique modifie la réflexion de l'onde primaire W1 sur le dispositif de mise en forme d'onde 14. Ainsi, le contrôle des états de ces éléments accordables, assure le contrôle du dispositif de mise en forme d'onde 14.

D'autres modes de réalisations du dispositif de mise en forme d'onde 14 sont possibles.

Le dispositif de mise en forme d'onde 14 génère une réflexion particulière de l'onde primaire W1 émise par l'antenne de réseau 18 du point d'accès 12 en fonction de paramètres déterminés à partir d'informations contenues dans le signal pilote SP qui lui sont transmises depuis le dispositif de communication sans fil 16 et par l'intermédiaire du point d'accès 12. Les paramètres sont par exemple les réglages des éléments accordables de la surface adaptable 15 du dispositif de mise en forme 14 et qui permettent de définir l'impédance électromagnétique de cette surface adaptable 15.

Le point d'accès 12 peut retransmettre à l'unité de contrôle 22 tout le signal pilote SP ou bien juste des parties du signal pilote SP qui ont trait à la communication avec le dispositif de communication sans fil 16. L'information extraite contient, par exemple :
- une estimation du niveau (amplitude, puissance, intensité, énergie) de réception de l'onde primaire W1 par le dispositif de communication sans fil 16 à travers le premier canal de communication C1 entre le point d'accès 12 et le dispositif de communication sans fil 16, ou
- une estimation de la qualité (taux d'interférence, bande passante, débit, niveau de bruit) de réception de l'onde primaire W1 par le dispositif de communication sans fil 16 à travers le premier canal de communication C1 entre le point d'accès 12 et le dispositif de communication sans fil 16, ou
- une estimation du canal en émission et/ou en réception (ou « Channel State Information » CSI en langue anglaise), e.g. estimation de l'amplitude et de la phase entre chaque antenne du dispositif de communication sans fil et/ou chaque antenne du point d'accès, estimation éventuellement effectuée pour une pluralité de fréquences de la bande passante du premier canal de communication C1, ce qui permet de former une matrice du canal.

L'information extraite transmise à l'unité de contrôle 22 peut également contenir des données sur des réseaux voisins utilisant le premier canal de communication C1 ou d'autres canaux de communications non utilisés entre le dispositif de communication sans fil 16 et le point d'accès 12, soit déterminés au niveau du dispositif de communication sans fil 16, soit déterminés au niveau du point d'accès 12 lui-même. Ces données sur les réseaux voisins ou autres communications sans fil sont par exemple des noms d'identification de réseau utilisant ces autres canaux (comme des noms de « Service Set Identifier » SSID pour un réseau de type WiFi), avec éventuellement les niveaux reçus (amplitude, puissance) pour chacun de ces réseaux des autres canaux (différents du premier canal de communication C1).

L'information contenue dans le signal pilote SP peut, contenir d'autres estimations.

Le dispositif de mise en forme d'onde 14 peut être ainsi utilisé pour améliorer la réception du dispositif de communication sans fil 16 dans une zone englobant le dispositif de communication sans fil 16 et au voisinage du dispositif de mise en forme d'onde 14, grâce à la réflexion contrôlée de l'onde primaire W1. Le dispositif de mise en forme d'onde 14 est par exemple utile dans un environnement comprenant des réflexions complexes d'ondes électromagnétiques qui interfèrent et notamment qui provoquent localement des combinaisons destructives de l'onde primaire, ce qui perturbe (réduit la qualité) et/ou réduit l'amplitude de la réception du dispositif de communication sans fil 16.

Une unité de contrôle 22 contrôle le dispositif de mise en forme d'onde 14 pour le configurer de telle sorte à générer une onde réfléchie W2 désirée, ou au moins optimisée, et fonction du signal pilote SP. L'unité de contrôle 22 détermine des paramètres à partir d'information contenue et/ou évaluée à partir du signal pilote SP et envoie par un canal de gestion Cg ces paramètres au dispositif de mise en forme d'onde 14 pour modifier les éléments accordables de la surface adaptable 15, ce qui par voie de conséquence modifie l'onde réfléchie W2. Le point d'accès 12 peut donc contrôler, par l'intermédiaire de l'unité de contrôle 22, le dispositif de mise en forme d'onde 14 pour modifier la réception de l'onde primaire W1 par le dispositif de communication sans fil 16. Par exemple, il améliorera cette réception grâce à la contribution de l'onde réfléchie W2.

L'unité de contrôle 22 est montrée sur la figure 1 comme étant physiquement séparée du point d'accès 12 et du dispositif de mise en forme 14. Dans ce cas, l'unité de contrôle est par exemple reliée au point d'accès 12 par une liaison d'unité de contrôle L2 (de type filaire ou sans fil). Cette liaison d'unité de contrôle L2 faire partie d'un réseau local (comme représenté) ou être une portion de la liaison de réseau L1 du réseau de communication global. Cependant, selon des variantes adaptables à tous les modes de réalisation, l'unité de contrôle 22 peut soit être contenue dans le point d'accès 12 soit être contenue dans le dispositif de mise en forme 14, par exemple sous la forme d'un « simple » logiciel intégré dans une unité de traitement de l'un ou de l'autre.

L'unité de contrôle 22 est en communication avec le point d'accès 12 pour recevoir des informations du signal pilote SP afin de contrôler le dispositif de mise en forme d'onde 14 en fonction de ces informations. Selon une variante, l'unité de contrôle 22 reçoit directement le signal pilote SP, sans passer par le point d'accès 12 et en extrait lui-même les informations nécessaires à son traitement, et notamment pour déterminer les paramètres de réglage de la surface adaptable 15. Selon une autre variante citée ci-dessus, l'unité de contrôle 22 est contenue dans le dispositif de mise en forme d'onde 14. Dans ce cas, cette unité de de contrôle peut éventuellement recevoir directement le signal pilote SP, sans passer par le point d'accès 12 et en extraire les informations pour le traitement, et notamment pour déterminer les paramètres.

Le canal de gestion Cg peut utiliser une liaison filaire ou sans-fil. Une liaison filaire est par exemple une liaison de type Ethernet, de type USB ou de type fibre optique. Une liaison sans fil est par exemple une liaison de téléphonie mobile, par exemple de quatrième génération (4G) ou autre, ou une liaison de réseau local sans fil, par exemple de type WiFi, ou une liaison de type Bluetooth, ou une liaison de l'internet des objets iOT (pour « Internet Of Things »).

L'unité de contrôle 22 peut aussi réciproquement communiquer avec le point d'accès 12 aussi de manière filaire ou pas.

Le dispositif de communication sans fil 16 est n'importe quel appareil communiquant sans fil, mobile ou fixe. Le dispositif de communication sans fil 16 est par exemple à un téléphone portable, un ordinateur portable équipé :
- d'un module de téléphonie mobile qui implémente n'importe quel protocole de télécommunication de première génération 1G, deuxième génération 2G, ou troisième génération 3G, de quatrième génération 4G ou LTE, de cinquième génération 5G, et/ou
- d'un module de réseau local sans fil, par exemple de type WiFi ou Bluetooth, ou iOT.

Le dispositif de communication sans fil 16 est par exemple tout périphérique équipé d'un module de téléphonie mobile ou d'un module de réseau local sans fil, tels que cités ci-dessus.

Le dispositif de communication sans fil 16 peut être alimenté par une prise électrique ou alimenté via une batterie interne. Le dispositif de communication sans fil 16 peut ne pas être mobile.

Le dispositif de communication sans fil 16 émet à intervalles régulier le signal pilote SP afin de communiquer à des dispositifs à portée :
- sa présence dans l'environnement proches desdits dispositifs (un ou plusieurs points d'accès, des équipements divers, ...), et/ou
- plusieurs informations concernant par exemple la réception de l'onde primaire W1 transmise dans le premier canal de communication C1.

Le signal pilote SP contient par exemple, de l'information sur l'amplitude et/ou qualité de l'onde primaire W1 reçue par le dispositif de communication sans fil 16 et/ou l'estimation du canal de communication C1, et optionnellement des informations sur la présence d'autres dispositifs dans les environs.

Le dispositif de communication sans fil 16 comprend une antenne 17 pour recevoir et/ou émettre une onde primaire W1 (directement ou indirectement par réflexion sur des éléments environnementaux, e.g. onde réfléchie W2), et une unité de traitement 19 connectée à l'antenne 17 pour traiter des signaux depuis et vers l'antenne 17 et pour former le signal pilote SP.

Selon une première variante, le dispositif de communication sans fil 16 transmet et/ou évalue le signal pilote par une onde primaire W1 émise par l'antenne 17 dans le premier canal de communication C1.

Selon une deuxième variante, le dispositif de communication sans fil 16 transmet et/ou évalue le signal pilote SP par une onde secondaire W1' émise par l'antenne 17 ou par une antenne auxiliaire dans un deuxième canal de communication C2. Le dispositif devant recevoir ce signal pilote SP possède réciproquement une antenne adaptée à ce deuxième canal de communication C2. Le deuxième canal de communication est une liaison du même type que celle du premier canal de communication, ou d'un type différent. Par exemple, le premier canal de communication C1 est une liaison de type WiFi et le deuxième canal de communication C2 est une liaison de type Bluetooth.

Le réseau de communication 10 fonctionne par exemple ainsi.

Un local (par exemple, une pièce, ou une habitation, building, ou même un transporteur mobile (par exemple voiture, bateau, bus, avion) est équipée du dispositif de mise en forme d'onde 14 contrôlé par le point d'accès 12 via l'unité de contrôle 22.

L'antenne de réseau 18 du point d'accès 12 possède une distance de portée qui dépend de la technologie utilisée (type de liaison sans fil). Cette distance de portée ou portée est une distance habituellement définie en champ libre (environnement vide, sans objet réflecteur dans la bande de fréquence de l'onde primaire). Cette distance de portée est par exemple la distance à partir de laquelle l'onde primaire a une amplitude réduite de 90% par rapport à son émission sur l'antenne de réseau 18. Dans l'environnement réel, la distance à laquelle l'onde primaire a une telle atténuation est inférieure à la distance de portée, à cause des éléments perturbateurs de l'environnement (bâtiments, véhicules, ...) .

Le dispositif de mise en forme d'onde 14 est placé à une distance d'installation du point d'accès 12 (son antenne de réseau 18) inférieure à la dite distance de portée pour que celui-ci reçoive une onde primaire W1 et soit apte à la modifier en une onde réfléchie W2, d'une amplitude suffisante pour modifier l'environnement électromagnétique. La distance d'installation est éventuellement supérieure à une distance minimale : le dispositif de mise en forme 14 est placé à une distance du point d'accès 12 permettant d'influer sur la réception d'un dispositif de communication sans fil 16, mobile, qui est lui-même habituellement à une distance variable du point d'accès 12.

Cependant, la réception à faible distance d'un dispositif de communication sans fil (niveau et qualité) est souvent bonne voire très bonne, et se dégrade lorsque la distance augmente du fait de l'atténuation avec la distance, et des réflexions multiples de l'environnement et/ou d'interférences destructives de ces réflexions. C'est pourquoi, il peut être avantageux de placer le dispositif de mise en forme d'onde 14 à une distance d'installation proche de la distance de portée, ou comprise entre la moitié de cette distance de portée et la distance de portée. Cependant, ceci dépend grandement de l'environnement réel et des mesures et/ou optimisation permettrons de trouver le compromis de l'emplacement dudit dispositif de mise en forme d'onde 14 dans ledit environnement.

Par exemple, la distance d'installation entre le point d'accès 12 et le dispositif de mise en forme d'onde 14 est d'au moins un dixième de la distance de portée de l'onde primaire W1 du point d'accès 12. Eventuellement, cette distance d'installation est supérieure à deux dixièmes, voire la moitié de la distance de portée, en fonction de chaque configuration de l'environnement. Le dispositif de mise en forme 14 est placé à une distance d'installation du point d'accès 12 et surtout à une position dans l'environnement qui peut permettre d'améliorer la zone de couverture (surface accessible) du réseau de communication sans fil par un dispositif de communication sans fil 16, par exemple pour couvrir des zones mal desservies.

Le dispositif de communication sans fil 16 émet un signal pilote SP afin de se faire détecter par les dispositifs présents dans son environnement, et notamment par le point d'accès 12.

Dans un premier exemple, le point d'accès 12 ne reçoit pas le signal pilote SP en provenance d'un dispositif de communication sans fil 16. Cela pourrait, par exemple, être le cas :
1) si le dispositif de communication sans fil 16 est hors de portée du point d'accès 12, c'est-à-dire que l'onde primaire W1 arrive avec une amplitude ou une qualité trop faible sur le dispositif de communication 16, ou bien
2) si le point d'accès 12 est hors de portée du dispositif de communication sans fil 16, c'est-à-dire que le signal pilote SP n'arrive pas au point d'accès 12, par exemple s'il est trop atténué par la distance ou par la présence d'autres ondes dans l'environnement du dispositif de communication sans fil 16 au point que le signal pilote ne soit pas perceptible par le point d'accès 12.

Tant que le point d'accès 12 ne reçoit pas le signal pilote SP, il n'a pas connaissance de la présence du dispositif de communication sans fil 16. Dans un tel cas, et afin de détecter le dispositif de communication sans fil 16, l'unité de contrôle 22 se met dans un premier mode de fonctionnement de recherche et transmet de façon périodique des paramètres, appelés des premiers paramètres au dispositif de mise en forme d'onde 14. Ces premiers paramètres changent une configuration des éléments accordables, et ainsi modifient périodiquement l'impédance de la surface adaptable 15, ce qui modifie l'onde réfléchie W2 qui est réfléchie par ladite surface adaptable 15. Une onde réfléchie W2 différente est ainsi créée pour chaque configuration des éléments accordables, c'est-à-dire pour chaque premier paramètre envoyé au dispositif de mise en forme d'onde 14. L'onde réfléchie W2 peut être telle que pour une telle configuration du dispositif de mise en forme d'onde 14, elle crée par combinaison avec l'onde primaire W1 émise par le point d'accès 12 et les autres ondes et/ou ondes réfléchies d'autres dispositifs ou de l'environnement, une interférence constructive (additive) qui permet une réception de l'onde primaire W1 reçue par le dispositif de communication sans fil 16, qui précédemment n'était pas reçue ou moins bien reçue par le dispositif de communication sans fil 16.

Ainsi, tant que le point d'accès 12 ne reçoit pas le signal pilote SP, l'unité de contrôle 22 envoie les premiers paramètres à intervalles de temps afin d'observer, pendant ledit intervalle de temps, une possible réception du signal pilote SP par le point d'accès 12.

La transmission des paramètres peut être périodique (c'est-à-dire à intervalles de temps réguliers) ou non périodique (c'est-à-dire à intervalles de temps non réguliers). Les premiers paramètres peuvent être choisis, par exemple, de manière aléatoire ou bien faire partie d'une matrice d'Hadamard. Les paramètres peuvent aussi être pris d'une base de données de l'unité de contrôle 22. Cette base de données peut être remplie en fonction de réceptions précédentes de signaux pilotes au fur et à mesure de l'utilisation du dispositif de communication sans fil 16 ou bien être pré-remplie avec des valeurs prédéterminées au moment de la programmation du l'unité de contrôle 22 ou par une phase d'apprentissage sur le site, i.e. dans l'environnement. Le point d'accès 12 émet des nouveaux premiers paramètres et observe la détection du signal pilote SP de façon itérative jusqu'à réception du signal pilote SP.

Une fois que le point d'accès 12 reçoit le signal pilote SP du dispositif de communication sans fil 16, l'unité de contrôle 22 se met dans un deuxième mode de fonctionnement d'optimisation et détermine et envoie des paramètres, appelés maintenant des deuxièmes paramètres au dispositif de mise en forme 14.

Selon une première variante, les deuxièmes paramètres sont déterminés dans le but de faire évoluer une valeur fonction d'informations contenues dans le signal pilote SP, par exemple pour une amélioration de la communication entre le point d'accès 12 et le dispositif de communication sans fil 16, et réciproquement. Par exemple, la valeur est simplement une des informations contenues dans le signal pilote SP, comme le niveau (amplitude ou puissance ou intensité) ou la qualité (taux d'interférence, bande passante, débit) ou l'estimation du canal de communication C1, ou une combinaison simple ou pondérée ou par toute fonction de coût de ces informations. La valeur peut également être déterminée avec la combinaison de données sur des réseaux voisins pour éviter des interférences entre plusieurs réseaux. En variante, l'unité de contrôle 22 peut décider de changer de canal de communication, et peut en informer le point d'accès 12 et/ou le dispositif de mise en forme d'onde 14 et/ou le dispositif de communication sans fil 16 (de manière directe ou indirecte par un desdits élément précédents).

L'unité de contrôle 22 exécute après chaque intervalle de temps un algorithme d'optimisation qui utilise ladite valeur explicitée ci-dessus et les valeurs précédentes (des périodes temporelles précédentes) et les deuxièmes paramètres précédents (des périodes précédentes), pour calculer les nouveaux deuxièmes paramètres à appliquer par le dispositif de mise en forme 14. Période après période, l'algorithme optimise ladite valeur, pour la minimiser ou maximiser selon le type de fonction ou fonction de coût préenregistrée dans l'algorithme de l'unité de contrôle 22.

Les deuxièmes paramètres sont au moins en partie différents des premiers paramètres. Les deuxièmes paramètres servent un autre but que les premiers paramètres. Alors que les premiers paramètres servent à la détection du dispositif de communication sans fil 16, les deuxièmes paramètres servent à l'optimisation d'une valeur fonction du signal pilote SP, c'est-à-dire une valeur fonction d'information contenues dans le signal pilote SP.

La valeur fonction du signal pilote SP peut être minimisée, maximisée, et/ou être modulée en fonction d'autres valeurs. Par exemple, la valeur est une puissance reçue par le dispositif de communication sans fil 16. Cette optimisation de la valeur (quel que soit son type) peut d'ailleurs conduire à une augmentation ou une réduction de la puissance d'émission du point d'accès 12. L'algorithme de l'unité de contrôle peut également prendre en compte cette puissance d'émission et optimiser les deuxièmes paramètres pour maximiser la réception de la communication au niveau du dispositif de communication sans fil 16, tout en réduisant simultanément la puissance d'émission du point d'accès 12. Notamment, grâce au dispositif de mise en forme d'onde qui est un dispositif passif (sans ajout d'énergie électromagnétique), il est ainsi possible à la fois d'améliorer la réception et de diminuer l'émission de l'antenne de réseau 18.

Dans un autre exemple, dans lequel on dispose de plusieurs dispositifs de communication sans fil 16, 16', tel que décrit plus en détail ci-après, la puissance d'émission du point d'accès 12 vers le premier dispositif de communication sans fil 16 peut être diminuée ou minimisée pour permettre une meilleure communication avec un deuxième dispositif de communication sans fil 16', présent dans l'environnement, et qui demanderait par exemple plus de bande passante. On peut ainsi mitiger ou réduire des interférences entre les communications des dispositifs de communication sans fil 16, 16', et optimiser la ressource spectrale (bande passante disponible) pour la répartir entre les dispositifs de communication sans fil, i.e. la répartir selon les besoins individuels de chacun d'eux. L'algorithme de l'unité de contrôle 22 peut modifier sa fonction de coût de calcul des deuxièmes paramètres en fonction de données concernant le point d'accès 12 lui-même, ou une pluralité de d'informations provenant de signaux pilotes SP de plusieurs dispositifs de communication sans fil.

Comme explicité ci-dessus, l'algorithme détermine les deuxièmes paramètres à partir de réceptions antérieures du signal pilote SP et des deuxièmes paramètres antérieurs. L'unité de contrôle 22 envoie les deuxièmes paramètres à intervalles de temps afin d'observer une possible réception du signal pilote SP pendant l'intervalle de temps suivant. Ainsi, par exemple, si l'on souhaite maximiser le niveau de réception par le dispositif de communication sans fil 16, l'unité de contrôle 22 teste en temps réel de nouveaux deuxièmes paramètres qui permettent d'augmenter par itération ledit niveau de réception du dispositif de communication sans fil 16.

Selon une deuxième variante, les deuxièmes paramètres ne sont pas déterminés par calcul d'un algorithme d'optimisation itératif, mais peuvent aussi être choisis parmi des deuxièmes paramètres enregistrés dans la base de données. Ces deuxièmes paramètres peuvent correspondre à des réceptions antérieures, correspondant par exemple à des valeurs déjà optimales ou ayant été optimisées avec l'algorithme d'optimisation. En outre, si par exemple, une géolocalisation du dispositif de communication sans fil 16 est possible, l'unité de contrôle 22 pourrait également associer des deuxièmes paramètres collectés dans le passé qui optimisaient la réception de la communication pour la même localisation spatiale du dispositif de communication sans fil 16.

Selon une troisième variante, les deuxièmes paramètres peuvent aussi être déterminés par des estimations du premier canal de communication C1. Dans le cas d'une multitude d'éléments d'antenne en émission par l'antenne de réseau 18 et/ou en réception par l'antenne 17 du dispositif de communication sans fil 16, les estimations du premier canal de communication C1 peuvent être rangées dans une matrice de transfert du canal. Dans un tel cas, l'algorithme de l'unité de contrôle effectuera avantageusement des calculs matriciels d'optimisation, tel que cela est connu, utilisant ainsi l'inversion de cette matrice, ou la conjugaison ou la décomposition en valeurs singulières.

Selon une quatrième variante, l'algorithme d'optimisation de l'unité de contrôle 22 n'effectuera pas un calcul d'optimisation après chaque réception d'un signal pilote SP, mais il effectuera le calcul d'optimisation de deuxièmes paramètres après un nombre prédéterminé de réception de signaux pilotes SP, ce qui permet d'obtenir une convergence moins sensible aux aléas et plus stable. Les deuxièmes paramètres sont mis à jours moins rapidement mais peuvent converger finalement plus rapidement vers la configuration optimale.

Selon une cinquième variante, l'intervalle de temps entre chaque calcul de deuxièmes paramètres n'est pas constant, i.e. les périodes de temps ne sont pas régulièrement périodiques.

Le réseau de communication 10 pourrait avoir d'autres variantes, prises en isolation ou en combinaison les unes des autres, certaines étant décrites ci-dessous.

Par exemple, le dispositif de mise en forme d'ondes 14 comprend également une antenne 24. Si l'antenne de réseau 18 du point d'accès 12 est une antenne multiple de type MIMO, le point d'accès 12 peut être programmé pour faire un réglage de son émission et/ou sa réception sur l'antenne 24 du dispositif de mise en forme d'ondes 14 afin d'augmenter en premier le niveau l'onde primaire W1 reçue sur la surface adaptable 15, et donc pour augmenter le niveau de l'onde réfléchie W2.

Ce réglage peut être réalisé par une focalisation ou une technique de formation de voies (communément appelé « beamforming ») ou une technique d'égalisation de canal ou un réglage mémorisé ou toute technique connue.

De cette manière, le dispositif de mise en forme 14 a plus d'effet sur le champ électromagnétique à proximité du dispositif de communication sans fil 16, i.e. sur l'onde réfléchie W2 reçue par le dispositif de communication sans fil 16.

La formation de voie de l'onde primaire W1 est obtenue par un réglage de retards et de gain de chaque signal des éléments d'antenne de l'antenne de réseau 18 du point d'accès 12. Ce réglage est une première optimisation effectuée par le point d'accès 12 qui cherche à maximiser un niveau de réception de l'onde primaire W1 sur l'antenne 24. A cette fin, le dispositif de mise en forme 14 retourne au point d'accès 12 ce niveau, par tout moyen, et par exemple le canal de gestion Cg et/ou la liaison de réseau L1 et/ou la liaison d'unité de contrôle L2.

Une fois la formation de voie correctement réglée sur l'antenne 24 du dispositif de mise en forme 14, le point d'accès 12 envoie à l'unité de contrôle 22 un ordre d'action pour que celle-ci prenne le relai. Ainsi :
- si aucun dispositif de communication sans fil 16 n'est détecté, l'unité de contrôle 22 est dans le premier mode de recherche, dans lequel elle utilise des premiers paramètres de réglage de la surface adaptable 15 pour essayer de détecter un dispositif de communication sans fil,
- si un dispositif de communication sans fil 16 est détecté, l'unité de contrôle 22 est dans le deuxième mode de fonctionnement d'optimisation, dans lequel elle utilise des deuxièmes paramètres de réglage de la surface adaptable 15 pour améliorer la réception de l'onde primaire W1 par un dispositif de communication sans fil 16 précédemment détecté.

Ainsi, l'unité de contrôle 22 effectue une deuxième optimisation (adaptation du dispositif de mise en forme) après la première optimisation (réglage sur le dispositif de mise en forme, par exemple par formation de voies) réalisée par le point d'accès 12.

Dès que les deuxièmes paramètres de réglage de la surface adaptable 15 sont obtenus de manière stable, c'est-à-dire que la deuxième optimisation a atteint un critère d'arrêt, l'unité de contrôle 22 peut envoyer une information de fin d'optimisation au point d'accès 12, et celui-ci peut éventuellement revenir dans le mode de la première optimisation de réglage de son émission et/ou sa réception sur l'antenne 24 du dispositif de mise en forme 14. Ainsi, l'ensemble du point d'accès 12 et de l'unité de contrôle 22 peut périodiquement alterner entre une première optimisation de réglage du point d'accès sur le dispositif de mise en forme, et une deuxième optimisation des paramètres de réglage du dispositif de mise en forme. La période et le nombre d'itérations peuvent être définis par le point d'accès.

Ainsi, ce réglage du point d'accès en priorité sur l'antenne 24 du dispositif de mise en forme 14 (par exemple par formation de voies), avant l'optimisation de la surface adaptable 15, est bénéfique à l'unité de contrôle 22 car elle permet d'améliorer :
- la détection du dispositif de communication sans fil 16 durant le premier mode de fonctionnement de recherche d'un dispositif de communication sans fil 16, et
- l'optimisation de la surface adaptable 15 durant le deuxième mode de fonctionnement d'optimisation.

Ainsi, les premiers et deuxièmes paramètres sont déterminés plus rapidement. Dans un tel fonctionnement, e la surface adaptable 15 du dispositif de mise en forme d'onde 14 fonctionne comme si elle était une antenne de réseau déportée ou déplacée de la position du point d'accès 12 vers la position du dispositif de mise en forme 14, puisque la surface adaptable 15 réfléchit et/ou transmet l'onde primaire W1 incidente avec une intensité améliorée par le réglage de l'émission et/ou réception (par exemple par formation de voie) du point d'accès 12 sur l'antenne 24 du dispositif de mise en forme 14.

Grâce aux dispositions précédentes, le point d'accès 12 et le dispositif de mise en forme 14 sont couplés pour améliorer la communication avec le dispositif de communication sans fil.

Dans un autre exemple, l'antenne de réseau 18 du point d'accès est également une antenne multiple de type MIMO, et, une fois le signal pilote SP reçu et/ou évalué par le point d'accès 12, le point d'accès 12 peut faire un réglage de son émission et/ou sa réception directement sur le dispositif de communication sans fil 16, afin d'augmenter et/ou améliorer en premier la réception sur le dispositif de communication sans fil 16.

Ce réglage peut être réalisé en émission et/ou réception, par exemple par une technique de focalisation ou une technique de formation de voie ou une technique d'égalisation de canal ou un réglage mémorisé ou toute technique connue.

Une fois cette focalisation correctement réglée sur l'antenne 17 du dispositif de communication sans fil 16 (par exemple par formation de voies), le point d'accès 12 envoie à l'unité de contrôle 22 un ordre d'action pour l'autoriser à se mettre dans le deuxième mode de fonctionnement de la (deuxième) optimisation dans laquelle des deuxièmes paramètres sont déterminés tel que décrit précédemment. La surface adaptable 15 est alors configurée pour encore améliorer la réception et/ou émission de la communication avec le dispositif de communication sans fil 16.

Dès que les deuxièmes paramètres de réglage de la surface adaptable 15 sont obtenus de manière stable, c'est-à-dire que la deuxième optimisation a atteint un critère d'arrêt, l'unité de contrôle 22 peut envoyer une information de fin d'optimisation au point d'accès 12, et celui-ci peut éventuellement revenir dans le mode de la première optimisation de focalisation sur l'antenne 17 du dispositif de communication sans fil 16. Ainsi, l'ensemble du point d'accès 12 et de l'unité de contrôle 22 peut périodiquement alterner entre une première optimisation de la focalisation du point d'accès sur le dispositif de communication sans fil, et une deuxième optimisation des paramètres de réglage du dispositif de mise en forme. La période et le nombre d'itérations peuvent être définis par le point d'accès.

Ainsi, cette focalisation par formation de voie en priorité sur l'antenne 17 du dispositif de communication sans fil 16 permet d'améliorer en premier la réception par le dispositif de communication sans fil 16, indépendamment du dispositif mise en forme d'onde 14. Ce fonctionnement n'améliore pas la détection du dispositif de communication sans fil 16, mais permet d'en améliorer plus rapidement sa communication (réception et/ou émission).

Grâce aux dispositions précédentes, le point d'accès 12 et le dispositif de mise en forme 14 sont couplés pour améliorer la communication avec le dispositif de communication sans fil.

Dans un autre exemple, le dispositif de mise en forme d'onde 14 comprend une antenne 24 et l'utilise pour détecter la présence éventuelle d'un système de communication sans fil 16 qui serait à portée de cette antenne 24 et qui ne serait pas à portée de l'antenne de réseau 18 du point d'accès 12 qui se trouve par exemple à plus grande distance. Cette détection dans la zone de portée du dispositif de mise en forme d'onde 14 permet de déterminer de la présence d'un ou plusieurs dispositifs de communication sans fil 16 dans l'environnement avant même la réception du signal pilote SP par le point d'accès 12, et donc permet de positionner l'unité de contrôle 22 dans son état de recherche avec des premiers paramètres, et éventuellement avec une formation de voie de l'antenne de réseau 18 sur le dispositif de mise en forme 14.

Dans encore un autre exemple, le premier canal de communication C1 entre le point d'accès 12 et le dispositif de communication sans fil 16 est symétrique, c'est à dire que la communication dans un premier sens (cité ci-dessus) et le sens inverse au premier sens (i.e. entre le dispositif de communication sans fil 16 et le point d'accès 12) s'effectue sur la même bande passante dudit premier canal de communication. En variante, le premier canal de communication est asymétrique (i.e. dans deux bandes passantes) par exemple pour en augmenter le débit soit dans le premier sens ou le sens inverse.

Dans encore un autre exemple, le canal de gestion Cg entre le point d'accès 12 et le dispositif de mise en forme d'onde 14 (et possiblement aussi le premier canal de communication C1 entre le point d'accès et le dispositif de communication sans fil 16) est asymétrique, c'est à dire communique sur deux ou plusieurs bandes passantes, créant ainsi deux (ou plus) sous-canaux de communication Cg, Cg' ou C1, C1'. Par exemple, une bande passante à 2.43 GHz et une à 2.47 GHz. Le dispositif de mise en forme d'onde 14 pourrait être contrôlé par l'unité de contrôle 22 pour optimiser le signal sur chaque bande passante de façon indépendante. Par exemple, l'unité de contrôle 22 pourrait contrôler une portion des éléments accordables de la surface adaptable 15 de façon à optimiser sur une première bande passante et une deuxième portion des éléments accordables de façon à optimiser sur une première bande passante. Dans un autre exemple, deux dispositifs de mise en forme d'onde 14 juxtaposés sont contrôlés par l'unité de contrôle 22, chacun étant optimisé en fonction du premier canal de communication C1 associé C1, C1'. Cette division spatiale du dispositif de mise en forme d'onde 14 permet de traiter ces deux premiers canaux de communication en même temps. Chaque bande passante peut être associée à des dispositifs de communication sans fil 16 différents (par exemple deux téléphones mobiles présents dans l'environnement) ou bien à deux modes de fonctionnement différents pour le même dispositif de de communication sans fil 16 : par exemple une communication montante (ou « uplink ») et une communication descendante (ou « downlink »).

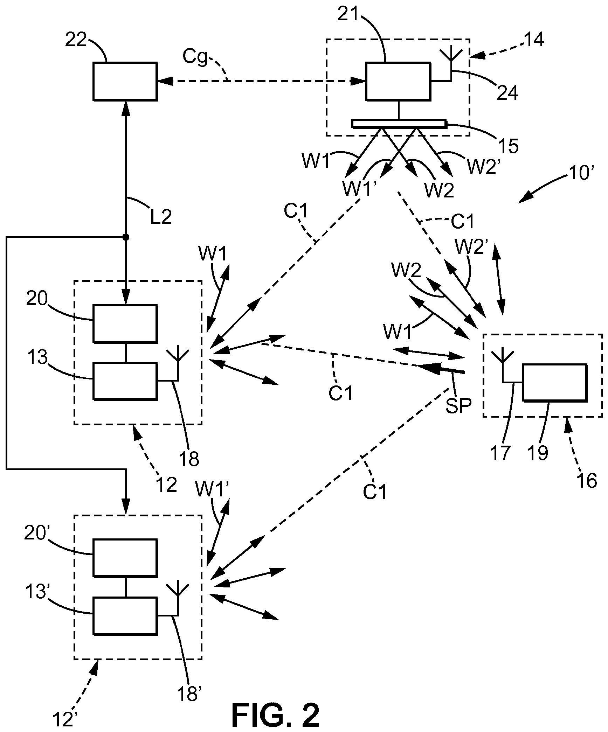

En référence maintenant à la **figure 2****,** un réseau de communication 10' selon un deuxième mode de réalisation va être décrit.

Le réseau de communication 10' du deuxième mode de réalisation est similaire au réseau de communication 10 du premier mode de réalisation et ses variantes peuvent également s'appliquer avec les mêmes avantages respectifs, excepté qu'il comprend un deuxième point d'accès 12'. Les éléments communs du réseau de communication 10' au réseau de communication 10 ne seront pas décrits à nouveau.

Le deuxième point d'accès 12' est similaire au point d'accès 12 (nommé ci-après premier point d'accès 12 pour plus de clarté) et comprend un module de transmission 13' d'onde primaire W1' dans le premier canal de communication C1, et un module de transmission de rétroaction 20' qui retransmet un signal pilote SP vers l'unité de contrôle 22. Le module de transmission 13' comprend une antenne de réseau 18' émettant l'onde primaire W1'. L'antenne de réseau 18' peut être une antenne simple ou une antenne multiple de type MIMO (pour « Multiple Inputs Multiple Outputs »). Le module de transmission de rétroaction 20 ' reçoit le signal pilote SP provenant du dispositif de communication sans fil 16, et le communique au dispositif de mise en forme d'onde 14 (de façon directe ou indirecte). Il se pourrait que le deuxième point d'accès 12' ne soit pas en communication directe avec le dispositif de mise en forme d'onde 14. Le deuxième point d'accès 12' peut éventuellement être relié en réseau au premier point d'accès 12 par exemple par la liaison de réseau L1 du réseau de communication global ou par l'intermédiaire d'une liaison de réseau local. Dans le cas où le réseau de communication (local ou global) comporte plusieurs points d'accès 12, comme par exemple pour couvrir un bâtiment ou immeuble, au moins un des premier et deuxième point d'accès 12, 12' est relié à l'unité de contrôle 22 afin de relayer le signal pilote SP ou des informations contenues dans le signal pilote SP.

Le dispositif de mise en forme d'onde 14 réfléchit l'onde primaire W1' en provenance du deuxième point d'accès 12' et la réfléchie en onde réfléchie W2'. Cette onde réfléchie W2' se combine aux autres ondes W1, W2 et W1' sur le dispositif de communication sans fil 16. L'unité de contrôle 22 prend en compte des informations du signal pilote SP en provenance du dispositif de communication sans fil 16 et concernant la communication avec le premier point d'accès 12 et le deuxième point d'accès 12'. Par exemple, l'unité de contrôle 22 peut déterminer de manière itérative des paramètres de configuration du dispositif de mise en forme 14 par l'évaluation d'une valeur d'optimisation qui utilisent ces informations des deux points d'accès. Par exemple, si la communication avec le premier point d'accès 12 est meilleure que celle avec le deuxième point d'accès 12', pour toute raison comme une distance inférieure ou une transmission moins perturbée, l'algorithme d'optimisation de l'unité de contrôle 22 peut privilégier la communication du dispositif de communication sans fil par l'intermédiaire du premier point d'accès 12 plutôt que celle par l'intermédiaire du deuxième point d'accès 12', en augmentant le niveau de l'onde réfléchie W2 par rapport au niveau de l'onde réfléchie W2'.

Ainsi, le dispositif de mise en forme 14 partagé avec les deux points d'accès 12, 12', peut favoriser la communication d'un dispositif de communication sans fil 16 avec le premier point d'accès 12 pendant qu'il favorise la communication d'un autre dispositif de communication sans fil 16' avec le deuxième point d'accès 12'. Le dispositif de mise en forme d'onde 14 aide donc à associer les divers dispositifs de communication sans fil 16, 16' avec un point d'accès, ce qui correspond à la cellularisation du réseau de communication entre les divers points d'accès 12, 12'.

Le réseau de communication 10' de ce deuxième mode de réalisation fonctionne de façon similaire au réseau de communication 10 du premier mode de réalisation, excepté que l'unité de contrôle 22 prend en compte la présence des deux point d'accès (le premier point d'accès 12 et le deuxième point d'accès 12') et de leur performance intrinsèque ou de leur performance pour la communication avec le dispositif de communication sans fil 16 pour la détermination des paramètres du dispositif de mise en forme d'onde 14.

Même si le cas de seulement deux points d'accès 12, 12' a été discuté ci-dessus, il se pourrait que le réseau de communication 10' ait plus de deux points d'accès pour essayer de communiquer avec le dispositif de communication sans fil 16.

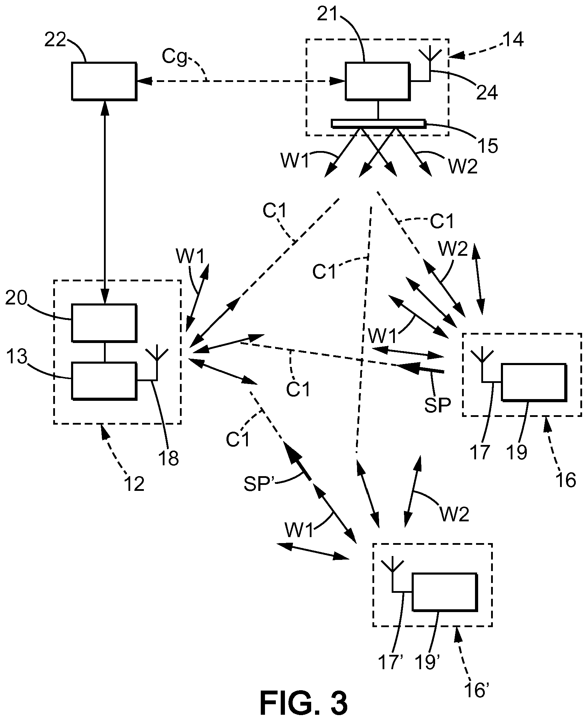

En référence maintenant à la **figure 3****,** un réseau de communication 10" selon un troisième mode de réalisation va être décrit.

Le réseau de communication 10'' du troisième mode de réalisation est similaire au réseau de communication 10 du premier mode de réalisation, et ses variantes peuvent également s'appliquer avec les mêmes avantages respectifs. Le réseau de communication 10'' diffère essentiellement en ce qu'il comprend un deuxième dispositif de communication sans fil 16', similaire au dispositif de communication sans fil 16 des précédents modes de réalisation (nommé ci-après premier dispositif de communication sans fil 16 pour plus de clarté). Les éléments communs du réseau de communication 10 du premier mode de réalisation et/ou du réseau de communication 10' du deuxième mode de réalisation ne seront pas décrits à nouveau.

Le réseau de communication 10' fonctionne de manière similaire au réseau de communication 10 du premier mode de réalisation, excepté que l'unité de contrôle 22 prend en compte le deuxième dispositif de communication sans fil 16' pour la détermination des paramètres du dispositif de mise en forme d'onde 14 afin d'optimiser deux canaux de communication, un premier canal de communication C1 avec le premier dispositif de communication sans fil 16 et un deuxième canal de communication C1' avec le deuxième dispositif de communication sans fil 16', en fonction de la présence et possiblement la demande de chacun des dispositifs de communication sans fil 16, 16' (ceux-ci pouvant avoir des besoins de communication différents l'un de l'autre).

Selon une première variante, le deuxième dispositif de communication sans fil 16' envoie un signal pilote SP' qui est réceptionné par le point d'accès 12 et transmis à l'unité de contrôle 22. L'unité de contrôle 22 prend en compte les deux signaux pilotes SP, SP' provenant de chaque dispositif de communication sans fil 16, 16' pour déterminer un nouveau paramètre du dispositif de mise en forme d'onde 14. Ce paramètre est le résultat d'un compromis entre pour optimiser chacune des communications, et influe sur une valeur du premier signal pilote SP et du deuxième signal pilote SP'.

Selon une deuxième variante, dans laquelle les dispositifs de communications sans fil 16, 16' utilisent des canaux de communication différents et dans laquelle le dispositif de mise en forme 14 comprend deux portions, la première portion adaptée au premier canal de communication C1 et la deuxième portion adaptée au deuxième canal de communication C1', l'unité de contrôle 22 détermine alors deux nouveaux paramètres à chaque itération, un pour chaque portion du dispositif de mise en forme d'onde 14 associé. Selon une troisième variante, dans laquelle le réseau de communication 10'' comprend deux dispositifs de mise en forme d'onde 14, 14' spatialement disjoints ou juxtaposés, mais connectés à une même unité de contrôle 22, l'unité de contrôle 22 détermine à partir des signaux pilotes SP, SP', deux nouveaux paramètres à chaque itération, un nouveau paramètre pour chacun des deux dispositifs de mise en forme d'onde 14, 14'.

Les paramètres pour chaque portion ou pour chaque dispositif de mise en forme des variantes précédentes peuvent être calculés en parallèle.

Si dans un état initial, seulement le premier dispositif de communication sans fil 16 est dans la zone de portée du point d'accès 12, le dispositif de mise en forme d'one 14 (si équipé de l'antenne 24) peut effectuer une recherche de détection de l'environnement pour tenter de détecter la présence éventuelle d'un autre dispositif de communication sans fil, tel que le deuxième dispositif de communication sans fil 16'. Une autre façon de continuer la détection d'éventuels dispositifs de communication sans fil hors de portée du point d'accès 12 est d'intercaler, dans l'émission des deuxièmes paramètres d'optimisation vers le dispositif de communication sans fil 16, l'émission de premier paramètres de détection jusqu'à l'éventuelle réception d'un deuxième signal pilote SP' par le point d'accès 12.

D'autres façons de détecter la présence de dispositifs de communication sans fil à proximité du point d'accès 12 et/ou du dispositif de mise en forme d'onde 14 sont possibles.

Une fois que le point d'accès 12 reçoit les deux signaux pilotes SP, SP', l'unité de contrôle 22 peut déterminer des deuxièmes paramètres afin d'optimiser les deux canaux de communication C1 et C1' entre le point d'accès 12 et chacun des deux dispositifs de communication sans fil 16, 16'. Par exemple, si le premier dispositif de communication sans fil 16 télécharge un large fichier, ce qui pourrait requérir plus de bande passante dans le premier canal de communication C1 que l'utilisation requise pour le deuxième dispositif de communication sans fil 16' dans le deuxième canal de communication C1', l'unité de contrôle 22 peut favoriser la réception du premier dispositif de communication sans fil 16 par rapport au deuxième dispositif de communication sans fil 16' (l'information de demande de bande passante étant par exemple contenue dans chacun des signaux pilotes SP et SP').

Même si le cas de deux dispositifs de communication sans fil 16, 16' a été discuté ci-dessus, il se pourrait que le réseau de communication 10" ait plus de deux dispositifs de communication sans fil.

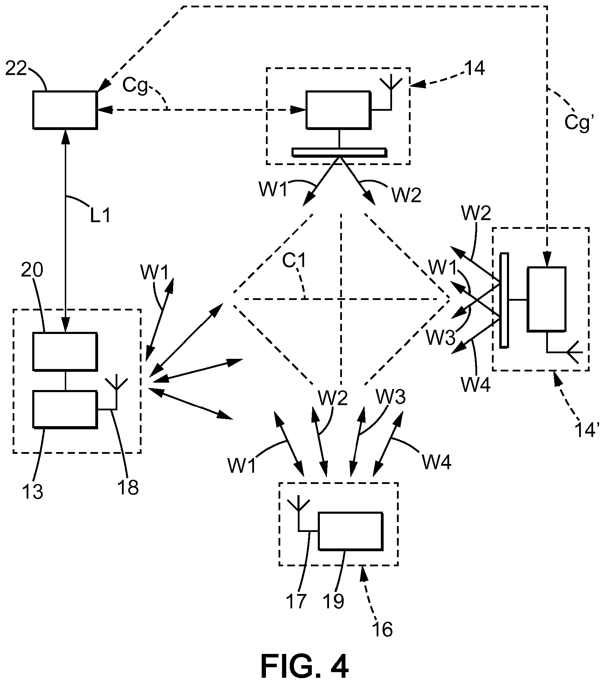

En référence maintenant à la **figure 4****,** un réseau de communication 10‴ selon un quatrième mode de réalisation va être décrit.

Le réseau de communication 10‴ du quatrième mode de réalisation est similaire au réseau de communication 10 du premier mode de réalisation, et ses variantes peuvent également s'appliquer avec les mêmes avantages respectifs. Le réseau de communication 10‴ diffère essentiellement en ce qu'il comprend un deuxième dispositif de mise en forme d'onde 14', similaire au dispositif de mise en forme d'onde 14 (maintenant dénommé premier dispositif de mise en forme 14). Les éléments communs des réseaux de communications précédemment explicités ne seront pas décrits à nouveau.

L'unité de contrôle 22 contrôle les premier et deuxième dispositifs de mise en forme 14, 14' par le canal de gestion Cg (premier canal de gestion) entre l'unité de contrôle 22 et le premier dispositif de mise en forme d'onde 14, et un deuxième canal de gestion Cg' entre l'unité de contrôle 22 et le deuxième dispositif de mise en forme d'onde 14'. Le deuxième canal de gestion Cg' peut être filaire ou sans fil. Chacun des premier et deuxième dispositifs de mise en forme 14, 14' possède éventuellement une unité de contrôle 22 ou 22' associée, ces unités de contrôles 22, 22' étant éventuellement connectées en réseau par le réseau de communication global ou un réseau local.

Le deuxième dispositif de mise en forme d'onde 14' est similaire au premier dispositif de mise en forme d'onde 14. Le deuxième dispositif de mise en forme d'onde 14' peut optionnellement avoir une antenne 24'. L'antenne 24' peut être utilisée pour recevoir des paramètres transmis par l'unité de contrôle 22 dans le deuxième canal de gestion Cg'. L'antenne 24' peut aussi servir de moyen de détection d'un dispositif de communication sans fil 16, par exemple à portée de cette antenne 24' du deuxième dispositif de mise en forme 14', et/ou pas à portée du point d'accès 12, et/ou pas à portée du premier dispositif de mise en forme 14 (si celui-ci est équipé d'une antenne 24 similaire).

Le réseau de communication 10‴ du quatrième mode de réalisation fonctionne ainsi.

L'onde primaire W1 est réfléchie par le premier dispositif de mise en forme d'onde 14 en une onde W2. Cette onde W2 est réfléchie par le deuxième dispositif de mise en forme d'onde 14' en une onde W3. De plus, l'onde primaire W1 est réfléchie par le deuxième dispositif de mise en forme 14' directement en une onde réfléchie W4. Ainsi, le champ dans l'environnement du dispositif de communication sans fil 16 comprend les ondes W1, W2, W3 et W4.

L'unité de contrôle 22 détermine les paramètres des premier et deuxième dispositifs de mise en forme d'onde 14, 14' de façon conjointe, c'est-à-dire qu'ils dépendent l'un de l'autre, puisque la réflexion par le deuxième dispositif de mise en forme 14' inclue une réflexion d'une onde W2 provenant du premier dispositif de mise en forme 14. Ainsi, toute modification de l'onde réfléchie W2 entrainera une modification de l'onde réfléchie W3.

Lorsque les dispositifs de mise en forme d'onde 14, 14' sont proches l'un de l'autre, l'unité de contrôle 22 détermine les paramètres des premier et deuxième dispositifs de mise en forme d'onde 14' de façon conjointe. Par « proche », on entend que le deuxième dispositif de mise en forme d'onde 14' est dans la portée du premier dispositif de mise en forme d'onde 14.

Comme pour l'antenne de réseau 18, le dispositif de mise en forme d'onde 14 a une distance de portée (ou portée) qui dépend de la technologie utilisée (type de liaison sans fil). Cette distance de portée est habituelle définie en champ libre. Cette distance de portée est par exemple la distance à partir de laquelle l'onde primaire transmise et/ou réfléchie par le dispositif de mise en forme d'onde 14 a une amplitude réduite de 90% par rapport à son amplitude au niveau du dispositif de mise en forme d'onde 14.

Notamment, la distance de portée du dispositif de mise en forme d'onde 14 est fonction du nombre et de la surface des éléments accordables de la surface adaptable 15 du dispositif de mise en forme d'onde 14, mais aussi de leurs dispositions relatives les uns par rapport aux autres (surface totale englobant tous ces éléments, ...).

Cependant, le dispositif de mise en forme d'onde 14 diffère de l'antenne de réseau 18 par le fait qu'il est de type passif (sans ajout d'énergie électromagnétique dans l'environnement), contrairement l'antenne de réseau 18 qui est actif car c'est un émetteur d'ondes électromagnétiques, et pour lequel il est possible d'augmenter la portée par amplification de son émission et/ou de sa réception. Il faut noter que la fonction du dispositif de mise en forme d'onde 14 pourra, par exemple, de limiter cette amplification et donc de réduire le niveau d'énergie électromagnétique émise par l'antenne de réseau 18, pour une efficacité constante : couverture ou portée effective globale avec l'aide du dispositif de mise en forme d'onde.

Les premier et deuxième dispositifs de mise en forme d'onde 14, 14' pourraient aussi ne pas être proches l'un de l'autre.

Si le deuxième dispositif de mise en forme d'onde 14' est hors de portée du point d'accès 12, mais mis tous deux à portée du dispositif de communication sans fil 16, le champ dans l'environnement du dispositif de communication sans fil 16 comprend les ondes W2 et W3. Ainsi selon la disposition et distance entre les dispositifs de mise en forme d'onde 14, 14' par rapport au dispositif de communication sans fil 16, le réseau de communication 10‴ peut fonctionner de façon à additionner la contribution de chaque dispositif de mise en forme d'onde 14, 14'.

Si le deuxième dispositif de mise en forme d'onde 14' est hors de portée du point d'accès 12, et que seul le deuxième dispositif de mise en forme 14 est à portée du dispositif de communication sans fil 16,ils fonctionnent de proche en proche : le deuxième dispositif de mise en forme d'onde 14' ne reçoit que l'onde réfléchie W2 et le dispositif de communication sans fil 16 ne reçoit que l'onde W3 réfléchie sur le deuxième dispositif de mise en forme d'onde 14'.

L'unité de contrôle 22 peut aussi déterminer les paramètres des premier et deuxième dispositifs de mise en forme d'onde 14, 14' de façon indépendante l'un de l'autre. Ceci peut être le cas si le deuxième dispositif de mise en forme d'onde 14' est si éloigné du premier dispositif de mise en forme d'onde 14 qu'il ne reçoit pas l'onde W2. Si le deuxième dispositif de mise en forme d'onde 14' peut éventuellement recevoir tout de même l'onde primaire W1 du point d'accès 12. Ceci pourrait être le cas par exemple si chacun des dispositifs de mise en forme d'onde 14, 14' est dans une pièce différente et le point d'accès 12 entre ces deux pièces.

De façon générale, le deuxième dispositif de mise en forme d'onde 14' est placé dans une limite de la portée du premier dispositif de mise en forme d'onde 14. Etre à la limite de la portée du dispositif de mise en forme d'onde permet d'utiliser les dispositifs de mise en forme d'onde de proche en proche afin d'atteindre une zone qui aurait été non couverte par le point d'accès 12 tout seul ou même avec l'aide du premier dispositif de mise en forme d'onde 14. Ceci pourrait être le cas dans des espaces de grandes dimensions ou bien dans des espaces qui ont des zones d'ombre de communication (exemple, un couloir en coude ou des zones entre des immeubles).

Même si le cas de deux dispositif de mise en forme d'onde 14, 14' a été discuté ci-dessus, le réseau de communication 10‴ peut comprendre plus de deux dispositifs de communication sans fil.

De même, les réseaux de communication 10', 10" et 10‴ peuvent être combinés entre eux, en partie ou tous ensemble. Par exemple, un réseau de communication peut contenir deux ou plus points d'accès 12, et/ou deux ou plus dispositif de communication sans fil 16, et/ou deux ou plus dispositifs de mise en forme d'onde 14 tel que discutés ci-dessus. Le mode de fonctionnement de tels réseaux est alors une combinaison des modes de fonctionnement décrits plus hauts.

Selon un aspect, le point d'accès 12 de réseau de communication comprend un module de transmission 13d comprenant une antenne de réseau 18 pour émettre et/ou recevoir une onde primaire, et pour émettre et recevoir un signal pilote d'un dispositif de communication sans fil, et le point d'accès comprend en outre une unité de contrôle 22 qui est adaptée pour envoyer des paramètres à un dispositif de mise en forme d'onde, et qui détermine les paramètres en fonction d'information liée au signal pilote, le dispositif de mise en forme d'onde étant adapté pour réfléchir et/ou transmettre l'onde primaire en une onde réfléchie en fonction des paramètres reçus de l'unité de contrôle, le signal pilote étant fonction de l'onde primaire émise par le point d'accès et de l'onde réfléchie par le dispositif de mise en forme d'onde, **et en ce que :**
- lorsque le module de transmission reçoit un signal pilote d'un dispositif de communication sans fil, l'unité de contrôle est dans un mode de fonctionnement d'optimisation dans lequel l'unité de contrôle transmet des paramètres au dispositif de mise en forme d'onde, la transmission de chacun des paramètres étant espacée dans le temps par une durée permettant une réception d'un signal pilote par le module de transmission, et dans lequel l'unité de contrôle détermine de nouveaux paramètres par un algorithme d'optimisation qui optimise une valeur qui est fonction de la succession temporelle des signaux pilotes reçus précédemment et des paramètres déterminés précédemment.

Selon un aspect, le réseau de communication comprend :
- un point d'accès 12 comprenant un module de transmission 13 comprenant une antenne de réseau 18 pour émettre et/ou recevoir une onde primaire, et pour émettre et recevoir un signal pilote d'un dispositif de communication sans fil,
- une unité de contrôle 22 en communication avec le point d'accès par un module de transmission de rétroaction 20 du point d'accès qui lui transmet au moins une information liée au signal pilote, l'unité de contrôle déterminant des paramètres en fonction de ladite information; et
- un dispositif de mise en forme d'onde 14 en communication avec l'unité de contrôle 22, le dispositif de mise en forme d'onde étant adapté à réfléchir et/ou transmettre l'onde primaire en une onde réfléchie en fonction des paramètres reçus de l'unité de contrôle, et le signal pilote étant fonction de l'onde primaire émise par le point d'accès et de l'onde réfléchie par le dispositif de mise en forme d'onde, et
dans lequel :
- lorsque le module de transmission reçoit un signal pilote d'un dispositif de communication sans fil, l'unité de contrôle est dans un mode de fonctionnement d'optimisation dans lequel l'unité de contrôle transmet des paramètres au dispositif de mise en forme d'onde, la transmission de chacun des paramètres étant espacée dans le temps par une durée permettant une réception d'un signal pilote par le module de transmission, et dans lequel l'unité de contrôle détermine de nouveaux paramètres par un algorithme d'optimisation qui optimise une valeur qui est fonction de la succession temporelle des signaux pilotes reçus précédemment et des paramètres déterminés précédemment.

Selon un aspect, le procédé de communication sans fil implémenté dans un réseau de communication comprend :
- un point d'accès 12 comprenant un module de transmission 13 comprenant une antenne de réseau 18 pour émettre et/ou recevoir une onde primaire,
- une unité de contrôle 22 en communication avec le point d'accès par un module de transmission de rétroaction 20 du point d'accès, et
- un dispositif de mise en forme d'onde 14 en communication avec l'unité de contrôle 22,
ledit procédé étant caractérisé en ce que :
- le dispositif de communication sans fil émet un signal pilote en réponse d'une onde primaire reçue,
- le point d'accès transmet à l'unité de contrôle 22 et par le module de transmission de rétroaction 20, au moins une information liée au signal pilote,
- l'unité de contrôle détermine des paramètres en fonction de ladite information, et transmet les paramètres au dispositif de mise en forme d'onde,
- le dispositif de mise en forme d'onde 14 réfléchit et/ou transmet l'onde primaire en une onde réfléchie en fonction des paramètres reçus de l'unité de contrôle, le signal pilote étant fonction de l'onde primaire émise par le point d'accès et de l'onde réfléchie par le dispositif de mise en forme d'onde, et
- lorsque le module de transmission reçoit un signal pilote d'un dispositif de communication sans fil, l'unité de contrôle est dans un mode de fonctionnement d'optimisation dans lequel l'unité de contrôle transmet des paramètres au dispositif de mise en forme d'onde, la transmission de chacun des paramètres étant espacée dans le temps par une durée permettant une réception d'un signal pilote par le module de transmission, et dans lequel l'unité de contrôle détermine de nouveaux paramètres par un algorithme d'optimisation qui optimise une valeur qui est fonction de la succession temporelle des signaux pilotes reçus précédemment et des paramètres déterminés précédemment.

## Revendications

1. **Point d'accès (12) de réseau de communication** comprenant un module de transmission (13) comprenant une antenne de réseau (18) pour émettre et/ou recevoir une onde primaire, et pour recevoir un signal pilote d'un dispositif de communication sans fil (16),
ledit point d'accès étant en communication avec une unité de contrôle (22) qui est adaptée pour envoyer des paramètres à un dispositif de mise en forme d'onde (14), et pour déterminer les paramètres en fonction d'au moins une information contenue dans le signal pilote, le dispositif de mise en forme d'onde étant adapté pour réfléchir et/ou transmettre l'onde primaire en une onde réfléchie en fonction des paramètres reçus de l'unité de contrôle, l'information étant fonction de l'onde primaire émise par le point d'accès et de l'onde réfléchie par le dispositif de mise en forme d'onde, ledit point d'accès étant **caractérisé en ce que :**
- lorsque le module de transmission est adapté pour recevoir un signal pilote d'un dispositif de communication sans fil, l'unité de contrôle est dans un mode de fonctionnement d'optimisation dans lequel l'unité de contrôle est adapté pour transmettre des paramètres, dits deuxièmes paramètres, au dispositif de mise en forme d'onde, la transmission de chacun des deuxièmes paramètres étant espacée dans le temps par une durée permettant une réception d'un signal pilote par le module de transmission, et dans lequel l'unité de contrôle est adaptée pour déterminer de nouveaux deuxièmes paramètres par un algorithme d'optimisation qui optimise une valeur qui est fonction d'une succession temporelle des signaux pilotes reçus précédemment et des deuxièmes paramètres déterminés précédemment, et
- tant que le module de transmission ne reçoit pas de signal pilote d'un dispositif de communication sans fil, l'unité de contrôle est dans une mode de fonctionnement de recherche dans lequel l'unité de contrôle est adaptée pour transmettre des paramètres, dits premiers paramètres, au dispositif de mise en forme d'onde, la transmission de chacun des premiers paramètres étant espacée dans le temps par une durée permettant une réception d'un signal pilote par le module de transmission et sont variés jusqu'à recevoir un signal pilote.

2. Point d'accès selon la revendication 1, dans lequel l'antenne de réseau (18) est une antenne multiple.

3. Point d'accès selon la revendication 2, dans lequel le point d'accès est adapté pour effectuer par son antenne de réseau (18) un réglage de son émission vers le dispositif de communication sans fil avant de permettre à l'unité de contrôle de passer dans le mode de fonctionnement d'optimisation qui optimise des paramètres du dispositif de mise en forme d'onde.

4. Point d'accès selon la revendication 2, dans lequel le dispositif de mise en forme d'onde comprend une antenne (24) pour effectuer par son antenne de réseau (18) un réglage de son émission vers ladite antenne du dispositif de mise en forme d'onde avant de permettre à l'unité de contrôle de passer dans le mode de fonctionnement d'optimisation qui optimise des paramètres du dispositif de mise en forme d'onde.

5. Point d'accès selon l'une des revendications 1 à 4, dans lequel le point d'accès est adapté pour effectuer par son antenne de réseau (18) un réglage de son émission vers le dispositif de communication sans fil ou vers le dispositif de mise en forme d'onde après la fin de l'optimisation du dispositif de mise en forme d'onde par l'unité de contrôle (22).

6. Point d'accès selon l'une des revendications 1 à 5, dans lequel le point d'accès comprend l'unité de contrôle.

7. **Un réseau de communication** comprenant :
- un point d'accès (12) selon l'une des revendications 1 à 5,
- une unité de contrôle (22) en communication avec le point d'accès par un module de transmission de rétroaction (20) du point d'accès qui lui transmet au moins l' information contenue dans le signal pilote; et
- un dispositif de mise en forme d'onde (14) en communication avec l'unité de contrôle (22)..

8. Le réseau de communication selon la revendication 7, dans lequel l'antenne de réseau (18) est une antenne multiple.

9. Le réseau de communication selon la revendication 8, dans lequel le point d'accès est adapté pour effectuer par son antenne de réseau (18) un réglage de son émission vers le dispositif de communication sans fil avant de permettre à l'unité de contrôle de passer dans le mode de fonctionnement d'optimisation qui optimise des paramètres du dispositif de mise en forme d'onde.

10. Le réseau de communication selon la revendication 8, dans lequel le dispositif de mise en forme d'onde comprend une antenne (24) pour effectuer par son antenne de réseau (18) un réglage de son émission vers ladite antenne du dispositif de mise en forme d'onde avant de permettre à l'unité de contrôle de passer dans le mode de fonctionnement d'optimisation qui optimise des paramètres du dispositif de mise en forme d'onde.

11. Le réseau de communication selon l'une des revendications 7 à 10, dans lequel le point d'accès est adapté pour effectuer par son antenne de réseau (18) un réglage de son émission vers le dispositif de communication sans fil ou vers le dispositif de mise en forme d'onde après la fin de l'optimisation du dispositif de mise en forme d'onde par l'unité de contrôle (22).

12. Le réseau de communication selon l'une des revendications 7 à 11, dans lequel le dispositif de mise en forme d'onde (14) comprend une antenne (24), et le dispositif de mise en forme d'onde (14) est adapté pour utiliser ladite antenne (24) pour détecter une présence d'un dispositif de communication sans fil non détecté par le point d'accès (12), par la réception d'un signal pilote, et dans lequel le dispositif de mise en forme d'onde est adapté pour transmettre cette détection au point d'accès pour permettre à l'unité de contrôle de passer dans le mode de fonctionnement d'optimisation qui optimise des paramètres du dispositif de mise en forme d'onde.

13. Le réseau de communication selon l'une des revendications 7 à 12, dans lequel l'unité de contrôle (22) inclut une base de données, et les paramètres du mode de fonctionnement d'optimisation sont au moins en partie issus de ladite base de données.

14. Le réseau de communication selon l'une des revendications 7 à 13, dans lequel le signal pilote reçu par le module de transmission de rétroaction (20) du point d'accès comprend une information de coordonnée de géolocalisation du dispositif de communication sans fil, et l'unité de contrôle (22) est adaptée pour déterminer les paramètres du mode de fonctionnement d'optimisation en fonction de ladite coordonnée de géolocalisation du dispositif de communication sans fil.

15. Le réseau de communication selon l'une des revendications 7 à 14, dans lequel les paramètres du mode de fonctionnement de recherche sont déterminés de façon aléatoire.

16. Le réseau de communication selon l'une des revendications 7 à 15, dans lequel une distance entre le point d'accès et le dispositif de mise en forme d'onde est d'au moins un dixième d'une portée du point d'accès.

17. Le réseau de communication selon l'une des revendications 7 à 16, dans lequel l'unité de contrôle (22) est adaptée pour transmettre au dispositif de mise en forme d'onde les paramètres par une liaison sans fil dans un canal de gestion.

18. Le réseau de communication selon l'une des revendications 7 à 17, dans lequel le point d'accès est un premier point d'accès (12) émettant une première onde primaire (W1), et dans lequel le réseau de communication comprend en outre un deuxième point d'accès (12'), le deuxième point d'accès émettant une deuxième onde primaire (W1'), et le dispositif de mise en forme d'onde (14) étant adapté à réfléchir et/ou réfléchir la première onde primaire en une première onde réfléchie (W2) et la deuxième onde primaire en une deuxième onde réfléchie (W2').

19. Le réseau de communication selon l'une des revendications 7 à 17, dans lequel le dispositif de mise en forme d'onde est un premier dispositif de mise en forme d'onde (14), et dans lequel le réseau de communication comprend en outre un deuxième dispositif de mise en forme d'onde (14'), l'unité de contrôle (22) étant adaptée pour transmettre au deuxième dispositif de mise en forme d'onde des paramètres indépendamment des paramètres déterminés pour le premier dispositif de mise en forme d'onde.

20. Le réseau de communication selon l'une des revendications 7 à 17, dans lequel le dispositif de communication sans fil est un premier dispositif de communication sans fil (16), et le signal pilote est un premier signal pilote émis par le premier dispositif de communication sans fil, et dans lequel le réseau de communication comprend en outre un deuxième dispositif de communication sans fil (16') qui est adapté pour émettre L un deuxième signal pilote, et dans lequel le point d'accès (12) est adapté pour transmettre au moins des informations du premier signal pilote et du deuxième signal pilote à l'unité de contrôle (22) pour que l'unité de contrôle soit adaptée à déterminer les paramètres en fonction du premier signal pilote et du deuxième signal pilote.

21. Le réseau de communication selon l'une des revendications 7 à 17, dans lequel le dispositif de mise en forme d'onde (14) comprend deux portions, chacune des deux portions étant adaptée à modifier une onde primaire dans une bande passante différente de l'autre portion et chacune des deux portions étant configurable de façon indépendante l'une de l'autre.

22. Le réseau de communication sans fil selon l'une des revendications 7 à 17, dans lequel l'onde primaire (W1) correspond à une onde d'un canal de communication d'un réseau d'un type choisi dans une liste comprenant un réseau de téléphonie sans fil, un réseau informatique sans fil, et un réseau d'objets connectés.

23. **Procédé de communication sans fil** implémenté dans un réseau de communication comprenant :
- un point d'accès (12) comprenant un module de transmission (13) comprenant une antenne de réseau (18) pour émettre et/ou recevoir une onde primaire,
- une unité de contrôle (22) en communication avec le point d'accès par un module de transmission de rétroaction (20) du point d'accès, et
- un dispositif de mise en forme d'onde (14) en communication avec l'unité de contrôle (22),
- un dispositif de communication sans fil (16) émet un signal pilote en réponse d'une onde primaire reçue,
- le point d'accès transmet à l'unité de contrôle (22) et par le module de transmission de rétroaction (20), au moins une information contenue dans le signal pilote,
- l'unité de contrôle détermine des paramètres en fonction de ladite information, et transmet les paramètres au dispositif de mise en forme d'onde,
ledit procédé étant **caractérisé en ce que**:
- le dispositif de mise en forme d'onde (14) réfléchit et/ou transmet l'onde primaire en une onde réfléchie en fonction des paramètres reçus de l'unité de contrôle, l'information étant fonction de l'onde primaire émise par le point d'accès et de l'onde réfléchie par le dispositif de mise en forme d'onde, et
- lorsque le module de transmission reçoit un signal pilote d'un dispositif de communication sans fil, l'unité de contrôle est dans un mode de fonctionnement d'optimisation dans lequel l'unité de contrôle transmet des paramètres, dits deuxièmes paramètres, au dispositif de mise en forme d'onde, la transmission de chacun des deuxièmes paramètres étant espacée dans le temps par une durée permettant une réception d'un signal pilote par le module de transmission, et dans lequel l'unité de contrôle détermine de nouveaux deuxièmes paramètres par un algorithme d'optimisation qui optimise une valeur qui est fonction d'une succession temporelle des signaux pilotes reçus précédemment et des deuxièmes paramètres déterminés précédemment, et
- tant que le module de transmission ne reçoit pas de signal pilote d'un dispositif de communication sans fil, l'unité de contrôle est dans une mode de fonctionnement de recherche dans lequel l'unité de contrôle transmet des paramètres, dits premiers paramètres, au dispositif de mise en forme d'onde, la transmission de chacun des premiers paramètres étant espacée dans le temps par une durée permettant une réception d'un signal pilote par le module de transmission et sont variés jusqu'à recevoir un signal pilote.

## Patentansprüche

1. **Zugangspunkt (12) eines Kommunikationsnetzes,** umfassend ein Übertragungsmodul (13), das eine Netzwerkantenne (18) zum Senden und/oder Empfangen einer Primärwelle und zum Empfangen eines Pilotsignals von einer drahtlosen Kommunikationsvorrichtung (16) umfasst,
wobei der Zugangspunkt mit einer Steuereinheit (22) in Verbindung steht, die dazu ausgebildet ist, Parameter an eine Wellenformungsvorrichtung (14) zu senden, und die Parameter in Abhängigkeit von wenigstens einer in dem Pilotsignal enthaltenen Information zu bestimmen, wobei die Wellenformungsvorrichtung dazu ausgebildet ist, die Primärwelle in Abhängigkeit von den von der Steuereinheit empfangenen Parametern in eine reflektierte Welle zu reflektieren und/oder zu übertragen, wobei die Information von der von dem Zugangspunkt gesendeten Primärwelle und der von der Wellenformungsvorrichtung reflektierten Welle abhängig ist, wobei der Zugangspunkt **dadurch gekennzeichnet ist, dass:**
- wenn das Übertragungsmodul dazu ausgebildet ist, ein Pilotsignal von einem drahtlosen Kommunikationsgerät zu empfangen, sich die Steuereinheit in einem Optimierungsbetriebsmodus befindet, wobei die Steuereinheit zum Übertragen von Parametern, den sogenannten zweiten Parametern, an die Wellenformungsvorrichtung ausgebildet ist, wobei die Übertragung jedes der zweiten Parameter zeitlich um eine Zeitdauer beabstandet ist, die den Empfang eines Pilotsignals durch das Übertragungsmodul ermöglicht, und wobei die Steuereinheit dazu ausgebildet ist, neue zweite Parameter durch einen Optimierungsalgorithmus zu bestimmen, der einen Wert optimiert, der von einer zeitlichen Abfolge der zuvor registrierten Pilotsignale und der zuvor bestimmten zweiten Parameter abhängt, und
- solange das Übertragungsmodul kein Pilotsignal von einer drahtlosen Kommunikationsvorrichtung empfängt, sich die Steuereinheit in einer Suchbetriebsart befindet, wobei die Steuereinheit dazu ausgebildet ist, Parameter, die sogenannten ersten Parameter, an die Wellenformungsvorrichtung zu übertragen, wobei die Übertragung jedes der ersten Parameter zeitlich um eine Zeitdauer beabstandet ist, die den Empfang eines Pilotsignals durch das Übertragungsmodul ermöglicht, und variiert wird, bis ein Pilotsignal empfangen wird.

2. Zugangspunkt nach Anspruch 1, wobei die Netzwerkantenne (18) eine Mehrfachantenne ist.

3. Zugangspunkt nach Anspruch 2, wobei der Zugangspunkt dazu ausgebildet ist, über seine Netzwerkantenne (18) eine Regelung seiner Sendung an das Kommunikationsgerät vorzunehmen, bevor die Steuereinheit in den Optimierungsbetriebsmodus wechseln kann, in der Parameter der Wellenformungsvorrichtung optimiert werden.

4. Zugangspunkt nach Anspruch 2, wobei die Wellenformungsvorrichtung eine Antenne (24) umfasst, um über seine Netzwerkantenne (18) eine Regelung seiner Ausstrahlung zu der Antenne der Wellenformungsvorrichtung vorzunehmen, bevor die Steuereinheit in den Optimierungsbetriebsmodus wechseln kann, welcher Parameter der Wellenformungsvorrichtung optimiert.

5. Zugangspunkt nach einem der Ansprüche 1 bis 4, wobei der Zugangspunkt dazu ausgebildet ist, über seine Netzwerkantenne (18) eine Regelung seiner Sendung an das drahtlose Kommunikationsgerät oder an die Wellenformungsvorrichtung vorzunehmen, nachdem die Optimierung der Wellenformungsvorrichtung durch die Steuereinheit (22) abgeschlossen ist.

6. Zugangspunkt nach einem der Ansprüche 1 bis 5, wobei der Zugangspunkt die Steuereinheit umfasst.

7. **Kommunikationsnetz,** umfassend:
- einen Zugangspunkt (12) nach einem der Ansprüche 1 bis 5,
- eine Steuereinheit (22), die mit dem Zugangspunkt über ein Rückkopplungsübertragungsmodul (20) des Zugangspunkts in Verbindung steht, das wenigstens die im Pilotsignal enthaltene Information an den Zugangspunkt sendet; und
- eine Wellenformungsvorrichtung (14), die mit der Steuereinheit (22) in Verbindung steht.

8. Kommunikationsnetz nach Anspruch 7, wobei die Netzwerkantenne (18) eine Mehrfachantenne ist.

9. Kommunikationsnetz nach Anspruch 8, wobei der Zugangspunkt dazu ausgebildet ist, durch seine Netzwerkantenne (18) eine Regelung seiner Sendung an die drahtlose Kommunikationsvorrichtung vorzunehmen, bevor er der Steuereinheit erlaubt, in den Optimierungsbetriebsmodus zu wechseln, welcher Parameter der Wellenformungsvorrichtung optimiert.

10. Kommunikationsnetz nach Anspruch 8, wobei die Wellenformungsvorrichtung eine Antenne (24) umfasst, um über ihre Netzwerkantenne (18) eine Regelung ihrer Sendung an die Antenne der Wellenformungsvorrichtung vorzunehmen, bevor die Steuereinheit in den Optimierungsbetriebsmodus wechseln kann, welcher die Parameter der Wellenformungsvorrichtung optimiert.

11. Kommunikationsnetz nach einem der Ansprüche 7 bis 10, wobei der Zugangspunkt dazu ausgebildet ist, durch seine Netzwerkantenne (18) eine Regelung seiner Sendung an das drahtlose Kommunikationsgerät oder an die Wellenformungsvorrichtung durchzuführen, nachdem die Optimierung der Wellenformungsvorrichtung durch die Steuereinheit (22) abgeschlossen ist.

12. Kommunikationsnetz nach einem der Ansprüche 7 bis 11, wobei die Wellenformungsvorrichtung (14) eine Antenne (24) umfasst , und die Wellenformungsvorrichtung (14) dazu ausgebildet ist, die Antenne (24) zu verwenden, um durch den Empfang eines Pilotsignals die Anwesenheit eines drahtlosen Kommunikationsgeräts zu erkennen, das nicht von dem Zugangspunkt (12) erfasst wird, und wobei die Wellenformungsvorrichtung dazu ausgebildet ist, diese Erkennung an den Zugangspunkt zu übertragen, damit die Steuereinheit in den Optimierungsbetriebsmodus wechseln kann, welcher Parameter der Wellenformungsvorrichtung optimiert.

13. Kommunikationsnetz nach einem der Ansprüche 7 bis 12, wobei die Steuereinheit (22) eine Datenbank umfasst und die Parameter des Optimierungsbetriebsmodus wenigstens teilweise aus der Datenbank stammen.

14. Kommunikationsnetz nach einem der Ansprüche 7 bis 13, wobei das von dem Rückkopplungsübertragungsmodul (20) des Zugangspunkts empfangene Pilotsignal eine Information zur Standortkoordinate des drahtlosen Kommunikationsgeräts umfasst, und die Steuereinheit (22) dazu ausgebildet ist, die Parameter des Optimierungsbetriebsmodus in Abhängigkeit von der Standortkoordinate des drahtlosen Kommunikationsgeräts zu bestimmen.

15. Kommunikationsnetz nach einem der Ansprüche 7 bis 14, wobei die Parameter der Suchbetriebsart zufällig bestimmt werden.

16. Kommunikationsnetz nach einem der Ansprüche 7 bis 15, wobei ein Abstand zwischen dem Zugangspunkt und der Wellenformungsvorrichtung wenigstens ein Zehntel einer Reichweite des Zugangspunkts beträgt.

17. Kommunikationsnetz nach einem der Ansprüche 7 bis 16, wobei die Steuereinheit (22) dazu ausgebildet ist, die Parameter über eine drahtlose Verbindung in einem Führungskanal an die Wellenformungsvorrichtung zu übertragen.

18. Kommunikationsnetz nach einem der Ansprüche 7 bis 17, wobei der Zugangspunkt ein erster Zugangspunkt (12) ist, der eine erste Primärwelle (W1) aussendet, und wobei das Kommunikationsnetz ferner einen zweiten Zugangspunkt (12') umfasst, wobei der zweite Zugangspunkt eine zweite Primärwelle (W1') aussendet, und die Wellenformungsvorrichtung (14) dazu ausgebildet ist, die erste Primärwelle in eine erste reflektierte Welle (W2) und die zweite Primärwelle in eine zweite reflektierte Welle (W2') zu reflektieren und/oder zu reflektieren.

19. Kommunikationsnetz nach einem der Ansprüche 7 bis 17, wobei die Wellenformungsvorrichtung eine erste Wellenformungsvorrichtung (14) ist, und wobei das Kommunikationsnetz ferner eine zweite Wellenformungsvorrichtung (14') umfasst, wobei die Steuereinheit (22) dazu ausgebildet ist, zu der zweiten Wellenformungsvorrichtung Parameter unabhängig von denjenigen Parametern zu übertragen, die für die erste Wellenformungsvorrichtung bestimmt wurden.

20. Kommunikationsnetz nach einem der Ansprüche 7 bis 17, wobei die drahtlose Kommunikationsvorrichtung eine erste drahtlose Kommunikationsvorrichtung (16) ist und das Pilotsignal ein erstes Pilotsignal ist, das von der ersten drahtlosen Kommunikationsvorrichtung gesendet wird, und wobei das Kommunikationsnetz ferner eine zweite drahtlose Kommunikationsvorrichtung (16') umfasst, die dazu ausgebildet ist, ein zweites Pilotsignal zu senden, und wobei der Zugangspunkt (12) dazu ausgebildet ist, wenigstens Informationen des ersten Pilotsignals und des zweiten Pilotsignals an die Steuereinheit (22) zu übertragen, so dass die Steuereinheit dazu ausgebildet ist, die Parameter in Abhängigkeit von dem ersten Pilotsignal und dem zweiten Pilotsignal zu bestimmen.

21. Kommunikationsnetz nach einem der Ansprüche 7 bis 17, wobei die Wellenformungsvorrichtung (14) zwei Abschnitte umfasst, wobei jeder der beiden Abschnitte dazu ausgebildet ist, eine Primärwelle in einer anderen Bandbreite als der andere Abschnitt zu modifizieren, und jeder der beiden Abschnitte unabhängig voneinander konfigurierbar ist.

22. Drahtloses Kommunikationsnetz nach einem der Ansprüche 7 bis 17, wobei die Primärwelle (W1) einer Welle eines Kommunikationskanals eines Netzwerks eines Typs entspricht, der aus einer Liste gewählt ist, die ein drahtloses Telefonnetzwerk, ein drahtloses Computernetzwerk und ein Netzwerk verbundener Objekte umfasst.

23. **Verfahren zur drahtlosen Kommunikation,** implementiert in einem Kommunikationsnetz, umfassend:
- einen Zugangspunkt (12), der ein Übertragungsmodul (13) mit einer Netzwerkantenne (18) zum Senden und/oder Empfangen einer Primärwelle umfasst,
- eine Steuereinheit (22), die mit dem Zugangspunkt über ein Rückkopplungsübertragungsmodul (20) des Zugangspunkts in Verbindung steht, und
- eine Wellenformungsvorrichtung (14), die mit der Steuereinheit (22) in Verbindung steht,
- wobei eine drahtlose Kommunikationsvorrichtung (16) ein Pilotsignal als Antwort auf eine empfangene Primärwelle sendet,
- wobei der Zugangspunkt an die Steuereinheit (22) und über das Rückkopplungsübertragungsmodul (20) wenigstens eine im Pilotsignal enthaltene Information sendet,
- wobei die Steuereinheit Parameter auf der Grundlage der Informationen bestimmt und die Parameter an die Wellenformungsvorrichtung überträgt,
wobei das Verfahren **dadurch gekennzeichnet ist, dass**:
- die Wellenformungsvorrichtung (14) abhängig von den von der Steuereinheit empfangenen Parametern die Primärwelle in eine reflektierte Welle reflektiert und/oder überträgt, wobei die Information von der vom Zugangspunkt gesendeten Primärwelle und der von der Wellenformungsvorrichtung reflektierten Welle abhängt, und
- wenn das Übertragungsmodul ein Pilotsignal von einem drahtlosen Kommunikationsgerät empfängt, sich die Steuereinheit in einem Optimierungsbetriebsmodus befindet, wobei die Steuereinheit Parameter, die sogenannten zweiten Parameter, an die Wellenformungsvorrichtung überträgt, wobei die Übertragung jedes der zweiten Parameter zeitlich um eine Zeitdauer beabstandet ist, die den Empfang eines Pilotsignals durch das Übertragungsmodul ermöglicht, und wobei die Steuereinheit neue zweite Parameter durch einen Optimierungsalgorithmus bestimmt, der einen Wert optimiert, der von einer zeitlichen Abfolge der zuvor registrierten Pilotsignale und der zuvor bestimmten zweiten Parameter abhängt, und
- solange das Übertragungsmodul kein Pilotsignal von einer drahtlosen Kommunikationsvorrichtung empfängt, sich die Steuereinheit in einem Suchbetriebsmodus befindet, in der die Steuereinheit Parameter, die sogenannten ersten Parameter, an die Wellenformungsvorrichtung überträgt, wobei die Übertragung jedes der ersten Parameter zeitlich um eine Zeitdauer beabstandet ist, die den Empfang eines Pilotsignals durch das Übertragungsmodul ermöglicht, und variiert wird, bis ein Pilotsignal empfangen wird.

## Claims

1. **Communication network access point (12)** comprising a transmission module (13) comprising a network antenna (18) for emitting and/or receiving a primary wave, and for receiving a pilot signal from a wireless communication device (16),
said access point communicating with a control unit (22) which is adapted to send parameters to a wave shaping device (14), and to determine the parameters on the basis of at least one item of information contained in the pilot signal, the wave shaping device being adapted to reflect and/or transmit the primary wave in a reflected wave as a function of the parameters received from the control unit, the information being a function of the primary wave emitted by the access point and of the wave reflected by the wave shaping device,
**the access point being characterized in that:**
- when the transmission module is adapted to receive a pilot signal from a wireless communication device, the control unit is in an optimization operating mode wherein the control unit is adapted to transmit parameters, being called second parameters, to the wave shaping device, the transmission of each of the parameters being separated in time by a duration enabling reception of a pilot signal by the transmission module, and wherein the control unit is adapted to determine new second parameters by an optimization algorithm which optimizes a value that is a function of a temporal succession of the previously received pilot signals and the previously determined second parameters, and
- as long as the transmission module does not receive a pilot signal from a wireless communication device, the control unit is in a search operating mode wherein the control unit is adapted to transmit parameters, being called first parameters, to the wave shaping device, the transmission of each of the parameters being separated in time by a duration enabling reception of a pilot signal by the transmission module, and are varied until receiving a pilot signal.

2. Access point according to claim 1, wherein the network antenna (18) is multiple antennas.

3. Access point according to claim 2, wherein the access point is adapted to regulate, via its network antenna (18), its emission towards the wireless communication device before allowing the control unit to enter the optimization operating mode which optimizes parameters of the wave shaping device.

4. Access point according to claim 2, wherein the wave shaping device comprises an antenna (24) to regulate, via its network antenna (18), its emission towards said antenna of the wave shaping device before allowing the control unit to enter the optimization operating mode which optimizes parameters of the wave shaping device.

5. Access point according to one of claims 1 to 4, wherein the access point is adapted to regulate, via its network antenna (18), its emission towards the wireless communication device or towards the wave shaping device after completion of the optimization of the wave shaping device by the control unit (22).

6. Access point according to one of claims 1 to 5, wherein the access point comprises the control unit.

7. **Communication network** comprising:
- an access point (12) according to any one of claims 1 to 5,
- a control unit (22) in communication with the access point via a feedback transmission module (20) of the access point which transmits to it at least one item of information contained in the pilot signal; and
- a wave shaping device (14) in communication with the control unit (22).

8. Communication network according to claim 7, wherein the network antenna (18) is multiple antennas.

9. Communication network according to claim 8, wherein the access point is adapted to regulate, via its network antenna (18), its emission towards the wireless communication device before allowing the control unit to enter the optimization operating mode which optimizes parameters of the wave shaping device.

10. Communication network according to claim 8, wherein the wave shaping device comprises an antenna (24) to regulate, via its network antenna (18), its emission towards said antenna of the wave shaping device before allowing the control unit to enter the optimization operating mode which optimizes parameters of the wave shaping device.

11. Communication network according to one of claims 7 to 10, wherein the access point is adapted to regulate, via its network antenna (18), its emission towards the wireless communication device or towards the wave shaping device after completion of the optimization of the wave shaping device by the control unit (22).

12. Communication network according to one of claims 7 to 11, wherein the wave shaping device (14) comprises an antenna (24), and the wave shaping device (14) is adapted to use said antenna (24) to detect the presence of a wireless communication device not detected by the access point (12), by receiving a pilot signal, and wherein the wave shaping device is adapted to transmit this detection to the access point in order to allow the control unit to enter the optimization operating mode which optimizes parameters of the wave shaping device.

13. Communication network according to one of claims 7 to 12, wherein the control unit (22) includes a database, and the parameters of the optimization operating mode come at least partially from said database.

14. Communication network according to one of claims 7 to 13, wherein the pilot signal received by the feedback transmission module (20) of the access point comprises geolocation coordinate information for the wireless communication device, and the control unit (22) is adapted to the parameters of the optimization operating mode on the basis of said geolocation coordinate of the wireless communication device.

15. Communication network according to one of claims 7 to 14, wherein the parameters of the search operating mode are determined randomly.

16. Communication network according to one of claims 7 to 15, wherein the distance between the access point and the wave shaping device is at least one tenth of the range of the access point.

17. Communication network according to one of claims 7 to 16, wherein the control unit (22) is adapted to transmit the parameters to the wave shaping device via a wireless link in a management channel.

18. Communication network according to one of claims 7 to 17, wherein the access point is a first access point (12) emitting a first primary wave (W1), and wherein the communication network further comprises a second access point (12'), the second access point emitting a second primary wave (W1'), and the wave shaping device (14) being adapted to reflect and/or reflect the first primary wave as a first reflected wave (W2) and the second primary wave as a second reflected wave (W2').

19. Communication network according to one of claims 7 to 17, wherein the wave shaping device is a first wave shaping device (14), and wherein the communication network further comprises a second wave shaping device (14'), the control unit (22) being adapted to transmit parameters to the second wave shaping device independently of the parameters determined for the first wave shaping device.

20. Communication network according to one of claims 7 to 17, wherein: the wireless communication device is a first wireless communication device (16), and the pilot signal is a first pilot signal emitted by the first wireless communication device; and wherein the communication network further comprises a second wireless communication device (16') which is adapted to emit a second pilot signal; and wherein the access point (12) is adapted to transmit at least some information from the first pilot signal and second pilot signal to the control unit (22) so that the control unit be adapted to determine the parameters on the basis of the first pilot signal and second pilot signal.

21. Communication network according to one of claims 7 to 17, wherein the wave shaping device (14) comprises two portions, each of the two portions being adapted to modify a primary wave in a different bandwidth than that of the other portion and each of the two portions being configurable independently of one another.

22. Wireless communication network according to one of claims 7 to 17, wherein the primary wave (W1) corresponds to a wave of a communication channel of a network of a type selected from a list comprising a wireless telephony network, a wireless computer network, and a network of connected objects.

23. **Method of wireless communication** implemented in a communication network comprising:
- an access point (12) comprising a transmission module (13) comprising a network antenna (18) for emitting and/or receiving a primary wave,
- a control unit (22) in communication with the access point via a feedback transmission module (20) of the access point, and
- a wave shaping device (14) in communication with the control unit (22),
- a wireless communication device emits a pilot signal in response to a received primary wave,
- the access point transmits, to the control unit (22) and via the feedback transmission module (20), at least one item of information contained in the pilot signal,
- the control unit determines parameters on the basis of said information, and transmits the parameters to the wave shaping device,
said method being **characterized in that**:
- the wave shaping device (14) reflects and/or transmits the primary wave in a reflected wave as a function of the parameters received from the control unit, the information being a function of the primary wave emitted by the access point and of the wave reflected by the wave shaping device, and
- when the transmission module receives a pilot signal from a wireless communication device, the control unit is in an optimization operating mode wherein the control unit transmits parameters to the wave shaping device, the transmission of each of the parameters, being called second parameters, being separated in time by a duration enabling reception of a pilot signal by the transmission module, and wherein the control unit determines new second parameters by an optimization algorithm which optimizes a value that is a function of a temporal succession of the previously received pilot signals and the previously determined second parameters, and
- as long as the transmission module does not receive a pilot signal from a wireless communication device, the control unit is in a search operating mode wherein the control unit transmits parameters, being called first parameters, to the wave shaping device, the transmission of each of the first parameters being spaced in time by a duration enabling reception of a pilot signal by the transmission module and are varied until receiving a pilot signal.
